# EUROPEAN PATENT APPLICATION

(11) **EP 4 398 662 A1**
(43) Date of publication of application: **10.07.2024**
(21) Application number: 22878721.4
(22) Date of filing: 24.08.2022
(51) Int. Cl.: H04W 72/02, H04W 28/18, H04L 69/24, H04W 84/12, H04W 88/02

(54) **ELECTRONIC DEVICE FOR SELECTING CHANNEL BETWEEN ELECTRONIC DEVICE AND EXTERNAL ELECTRONIC DEVICE ON BASIS OF CHARACTERISTICS OF APPLICATION, AND OPERATION METHOD THEREOF**

(30) Priority: 07.10.2021 KR 20210133495
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); BANG, Hyejung, Suwon-si, Gyeonggi-do 16677 (KR); JANG, Wonjun, Suwon-si, Gyeonggi-do 16677 (KR); LEE, Sunkee, Suwon-si, Gyeonggi-do 16677 (KR)
(74) Representative: Gulde & Partner
(86) International application number: PCT/KR2022/012673
(87) International publication number: WO 2023/058900

(57) **Abstract**

In an electronic device and an operation method of the electronic device according to various embodiments, the electronic device may comprise: a communication circuit for supporting simultaneous transmission and reception of signals at different frequency bands of short-distance wireless communication; and a processor operatively connected to the communication circuit, wherein the processor is configured to: in response to execution of an application, discover an external electronic device to be connected to the electronic device through the short-distance wireless communication; receive performance information of the external electronic device, the information being related to whether simultaneous transmission and reception of signals at different frequency bands are supported, during a group owner (GO) negotiation procedure between the external electronic device and the electronic device; and select a frequency band and/or a channel to be used for connection to the external electronic device, on the basis of characteristics of the application and the performance information of the external electronic device. Various other embodiments are possible.

## Description

### [Technical Field]

The disclosure relates to an electronic device and an operation method of an electronic device and, more particularly, to technology of selecting, based on the attribute of an application, a channel between an electronic device and an external electronic device.

### [Background Art]

With the spread of various types of electronic devices, the speed of wireless communication that may be used by various electronic devices has been increased. Among wireless communication supported by recent electronic devices, IEE 802.11 WLAN (or Wi-Fi) is the standard for a high-speed wireless connection in various electronic devices. Wi-Fi, when it was first embodied, was capable of supporting a transmission speed of a maximum of approximately 1 to 9 Mbps. Wi-Fi 6 (or IEEE 802.11 ax) but is now capable of supporting a transmission speed of a maximum of approximately 10 Gbps.

An electronic device is capable of supporting various services using relatively high capacity data (e.g., a video streaming service with a UHD level image quality, an augmented reality (AR) service, a virtual reality (VR) service, or a mixed reality (MR) service) via wireless communication that supports a high transmission speed.

In the IEEE 802.11 WLAN standard, technology that supports data transmission or reception via a peer to peer (P2P) scheme is defined. Technology called Wi-Fi P2P may support data transmission and/or reception of an electronic device without passing through an AP.

Via Wi-Fi P2P, at least one electronic device is connected to one another, and a plurality of electronic devices is capable of transmitting and/or receiving data by using any one electronic device as a medium. An electronic device acts as a medium is defined as a group owner (GO), and other electronic devices may be defined as group clients.

### [Disclosure of Invention]

### [Technical Problem]

As a part of a process of connecting to an external electronic device via short-distance wireless communication (e.g., Wi-Fi), an electronic device may perform a group owner (GO) negotiation and may select, based on data exchanged during the negotiation process, a channel to be established between the electronic device and the external electronic device.

In the situation in which the electronic device is connected to an access point (AP) and the external electronic device is connected to another AP, the electronic device may perform GO negotiation with the external electronic device.

When the electronic device is connected to the external electronic device via a channel in a frequency band different from the channel between the electronic device and the AP, the electronic device that operates as a GO may switch to an STA in order to perform data transmission or reception with the AP.

In order for the electronic device to transmit or receive a signal of a different frequency band, an operation mode of a communication circuit needs to be switched. While the operation mode of the communication circuit is switched, the electronic device may happen to fail to perform data reception or transmission with the external electronic device and/or AP.

To prevent the above-described situation, the electronic device may select a channel same as the channel between the electronic device and the AP, and may perform data transmission and/or reception with the external electronic device via the selected channel.

In the case in which the channel between the electronic device and the AP is a channel of a low frequency band, a data transmission speed and/or reception speed between the electronic device and the external electronic device may be relatively low. In the case in which a service performed using short-distance wireless communication is a service that requires a relatively high transmission speed and/or reception speed, the quality of the service may happen to deteriorate.

### [Solution to Problem]

An electronic device according to various embodiments of the disclosure may include a communication circuit configured to support simultaneous transmission and reception of signals of different frequency bands of short-distance wireless communication, and a processor operatively connected to the communication circuit, and the processor is configured to perform discovery of an external electronic device to be connected to the electronic device via the short-distance wireless communication in response to execution of an application, is configured to receive performance information of the external electronic device that is related to whether simultaneous transmission and reception of signals of different frequency bands is supported, during a group owner (GO) negotiation procedure performed between the external electronic device and the electronic device, and is configured to select a frequency band and/or channel to be used for connection to the external electronic device with reference to an attribute of the application and the performance information of the external electronic device.

An electronic device according to various embodiments of the disclosure may include a communication circuit configured to support simultaneous transmission and reception of signals of different frequency bands of short-distance wireless communication, and a processor operatively connected to the communication circuit, and the processor is configured to perform discovery of an external electronic device to be connected to the electronic device via the short-distance wireless communication in response to execution of an application, is configured to receive performance information of the external electronic device that is related to whether simultaneous transmission and reception of signals of different frequency bands is supported, during a group owner (GO) negotiation procedure performed between the external electronic device and the electronic device, and is configured to select a frequency band and/or channel to be used for connection to the external electronic device with reference to performance information of the electronic device and the performance information of the external electronic device, and the performance information of the external electronic device is included in a GO intent included in a message received during the GO negotiation procedure.

An operation method of an electronic device according to various embodiments of the disclosure may include an operation of performing discovery of an external electronic device to be connected to the electronic device via short-distance wireless communication in response to execution of an application, an operation of receiving performance information of the external electronic device that is related to whether simultaneous transmission and reception of signals of different frequency bands is supported, during a group owner (GO) negotiation procedure performed between the external electronic device and the electronic device, and an operation of selecting a frequency band and/or channel to be used for connection to the external electronic device with reference to an attribute of the application and performance information of the external electronic device.

### [Advantageous Effects of Invention]

An electronic device and an operation method of an electronic device according to various embodiments of the disclosure may select, based on the attribute of an application, a channel between an external electronic device and the electronic device. Therefore, in the case of an application that requires a high transmission speed and/or reception speed, the quality of a service provided by the application may be increased by selecting a channel of a relatively high frequency band.

An electronic device and an operation method of an electronic device according to various embodiments of the disclosure may identify performance information of an external electronic device based on a GO intent value set differently based on whether signals of different frequency bands are capable of being simultaneously transmitted and/or received, and the frequency band of an AP connected between the external electronic device and an AP. Therefore, the electronic device may improve the quality of a service provided by an application by selecting, based on the performance information of the external electronic device, a channel of a frequency band which is high and where 3-way channel concurrency does not occur.

### [Brief Description of Drawings]

FIG. 1 is a block diagram of an electronic device according to various embodiments of the disclosure;
FIG. 2 is a block diagram of a program according to various embodiments of the disclosure;
FIG. 3A is a block diagram of a first electronic device, a second electronic device, a first access point (AP), and/or a second AP according to various embodiments of the disclosure;
FIG. 3B is a diagram illustrating an operation of performing negotiation in order to determine a group owner (GO) while a first electronic device and a second electronic device operate for a connection via short-distance wireless communication, according to various embodiments of the disclosure;
FIG. 3C is a diagram illustrating an embodiment in which a first electronic device and a second electronic device receive signals according to various embodiments of the disclosure;
FIG. 4 is a block diagram of an electronic device according to various embodiments of the disclosure;
FIG. 5 is a diagram illustrating a GO intent included in a GO negotiation request message and/or GO negotiation response message that an electronic device transmits or receives according to various embodiments of the disclosure;
FIG. 6 is a flowchart illustrating an operation method of an electronic device according to various embodiments of the disclosure;
FIG. 7 is a flowchart illustrating an operation of selecting a channel to be connected to an external electronic device, by an electronic device according to various embodiments of the disclosure;
FIG. 8A and FIG. 8B are flowcharts illustrating an operation of selecting a channel to be connected to an external electronic device, by an electronic device according to various embodiments of the disclosure; and
FIG. 9 is a flowchart illustrating an operation method of an electronic device according to various embodiments of the disclosure.

### [Mode for Invention]

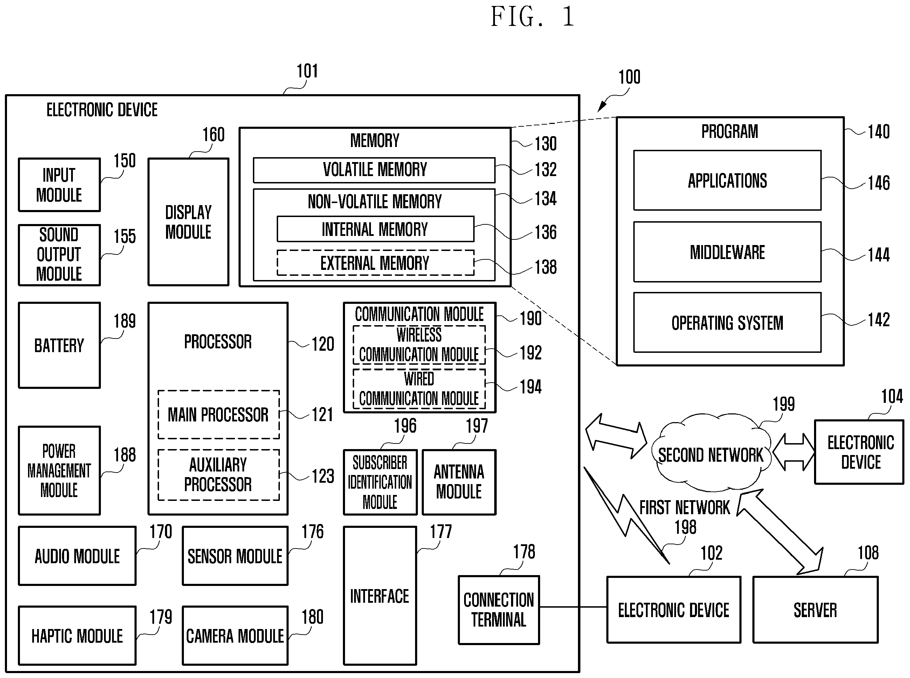

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

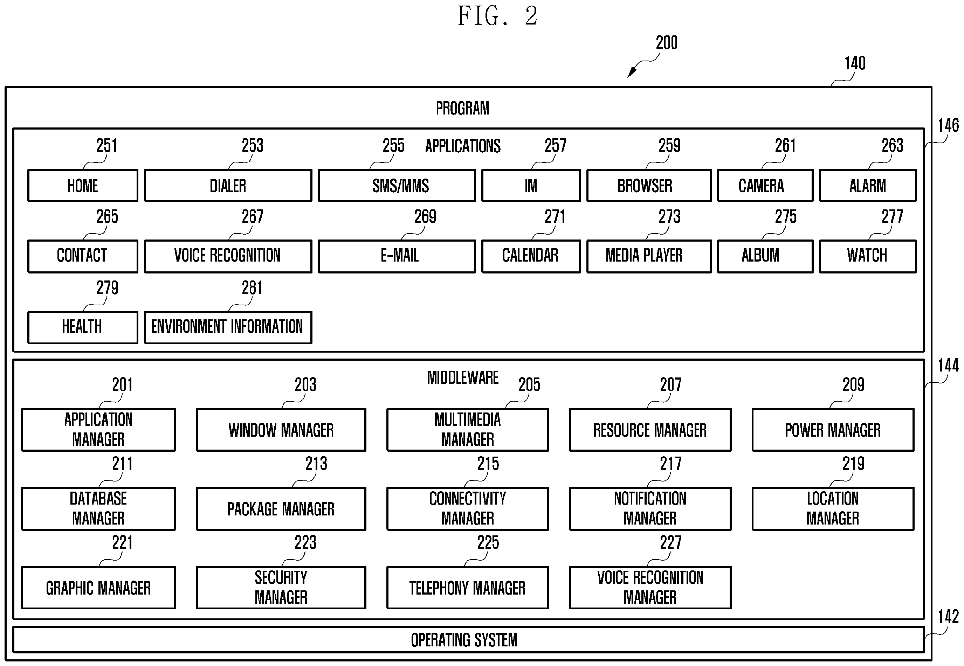

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be preloaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

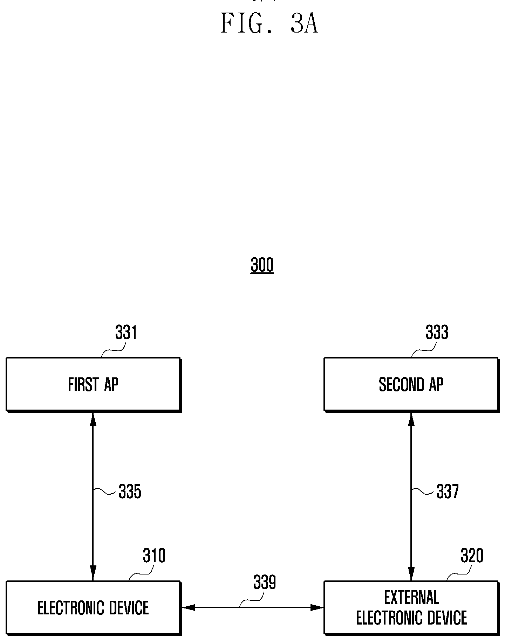

FIG. 3A is a block diagram of a first electronic device, a second electronic device, a first access point (AP), and/or a second AP according to various embodiments of the disclosure.

Referring to FIG. 3A, a wireless LAN system 300 may include an electronic device 310 and/or an external electronic device 320. According to an embodiment, the electronic device 310 may perform wireless communication with a first AP 331 via short-distance wireless communication. The short-distance wireless communication may be a communication scheme that both the electronic device 310 and/or the first AP 331 are capable of supporting. For example, wireless communication may be Wi-Fi. The first AP 331 may perform a function of a base station that provides wireless communication to at least one electronic device (e.g., the electronic device 310) located within the radius of communication of the wireless LAN system 300. For example, the first AP 331 may include an access point (AP) of IEEE 802.11. The electronic device 310 may include a station (STA) of IEEE 802.11.

The short-distance wireless communication used when the electronic device 310 and/or the first AP 331 exchange data may use various frequency bands including a first frequency band (e.g., 2.4 GHz), a second frequency band (e.g., 5 GHz), and/or a third frequency band (e.g., 6 GHz). The electronic device 310 and/or the first AP 331 may establish a channel included in one of a plurality of frequency bands, and may exchange data by using the established channel.

According to an embodiment, the external electronic device 320 may perform wireless communication with a second AP 333 via short-distance wireless communication. The second AP 333 may perform a function of a base station that provides wireless communication to at least one electronic device (e.g., the external electronic device 320) located within the radius of communication of the wireless LAN system 300. For example, the second AP 333 may include an access point (AP) of IEEE 802.11. The external electronic device 320 may include a station (STA) of IEEE 802.11.

The short-distance wireless communication used when the external electronic device 320 and/or the second AP 333 exchange data may use various frequency bands including a first frequency band (e.g., 2.4 GHz), a second frequency band (e.g., 5 GHz), and/or a third frequency band (e.g., 6 GHz). The external electronic device 320 and/or the second AP 333 may establish a channel included in one of a plurality of frequency bands, and may exchange data by using the established channel.

The electronic device 310 and the external electronic device 320 may be directly connected via short-distance wireless communication without passing through separate entities (e.g., the first AP 331 and/or second AP 333). The electronic device 310 and the external electronic device 320 may be connected based on the Wi-Fi direct standard defined by Wi-Fi alliance (WFA).

The electronic device 310 and/or the second electronic device 320 may perform discovery of an electronic device to be connected therewith in order to connect to each other via short-distance wireless communication, a provisioning discovery exchange operation, a group owner (GO) negotiation operation of determining an electronic device to be act as a host between the electronic device 310 and/or the external electronic device 320, and/or a provision operation.

A first channel 335 used for data exchange between the first AP 331 and the electronic device 310, a second channel 337 used for data exchange between the second AP 333 and the external electronic device 320, and a third channel 339 used for data exchange between the electronic device 310 and the external electronic device 320 may have frequency bands different from each other (or different channel numbers).

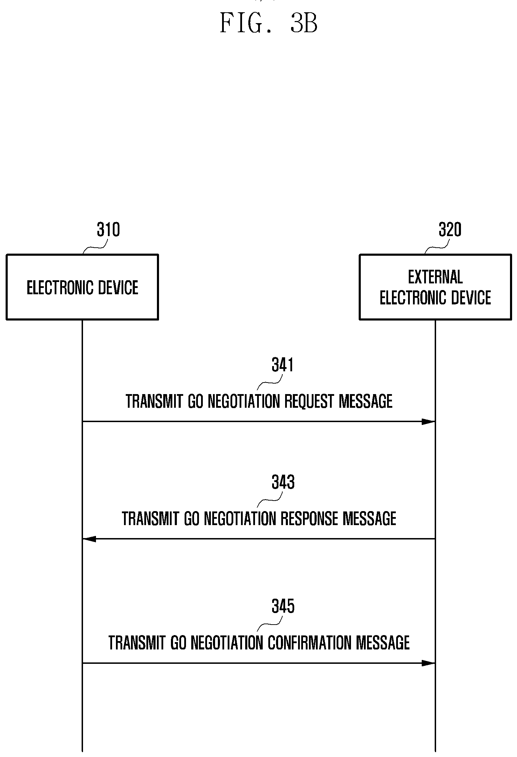

FIG. 3B is a diagram illustrating an operation of performing negotiation in order to determine a group owner (GO) while a first electronic device and a second electronic device operate for a connection via short-distance wireless communication, according to various embodiments of the disclosure.

FIG. 3B illustrates messages exchanged during a negotiation for determining a GO performed while the first electronic device (e.g., the electronic device 310 of FIG. 3A) and the second electronic device (e.g., the external electronic device 320 of FIG. 3B) are connected via short-distance wireless communication (e.g., Wi-Fi direct).

In operation 341, the electronic device 310 may transmit a GO negotiation request message to the external electronic device 320.

The electronic device 310 may discover an external electronic device (e.g., the external electronic device 320) to be connected via short-distance wireless communication in a discovery procedure, and may transmit a GO negotiation request message to the discovered external electronic device 320.

The GO negotiation request message may include P2P IE information and Wi-Fi simple configuration information element (WSC IE) information. The P2P IE information may include a GO intent and operating channel attribute information to be used for determining a GO. The operating channel attribute may include preferred channel information that is information related to a channel that the electronic device 310 prefers among the channels capable of being established between the electronic device 310 and the external electronic device 320, and/or preferred frequency band information that is information related to a frequency band that the electronic device 310 prefers. The preferred channel information may be included in a channel number field of an operating channel attribute field. The preferred frequency band information may be included in an operating class field of the operating channel attribute field.

In operation 343, the external electronic device 320 may transmit a GO negotiation response message to the electronic device 310.

The GO negotiation response message may include P2P IE information and WSC IE information. The P2P IE information may include a GO intent and operating channel attribute information to be used for determining a GO. The operating channel attribute may include preferred channel information that is information related to a channel that the external electronic device 320 prefers among the channels capable of being established between the electronic device 310 and the external electronic device 320, and/or preferred frequency band information that is information related to a frequency band that the external electronic device 320 prefers. The preferred channel information may be included in a channel number field of an operating channel attribute field. The preferred frequency band information may be included in an operating class field of the operating channel attribute field.

The electronic device 310 may receive the GO negotiation response message, and may compare the GO intent included in the GO negotiation response message and the GO intent included in the GO negotiation request message. An electronic device that transmits a higher GO intent value may be determined as a group owner (GO), and an electronic device that transmits a lower GO intent value may be determined as a group client (GC). The GO may operate as a host in a short-distance wireless communication system, and the GC may operate as a client. For ease of description, it is assumed that the electronic device 310 performs as a GO in the disclosure.

Based on the preferred channel of the electronic device 310, the preferred frequency band of the electronic device 310, the preferred channel of the external electronic device 320, and/or the preferred frequency band of the external electronic device 320, the electronic device 310 may select a channel to be used for connecting the electronic device 310 and the external electronic device 320.

In operation 345, the electronic device 310 may transmit a GO negotiation confirmation message to the external electronic device 320.

The GO negotiation confirmation message may include information associated with the selected channel.

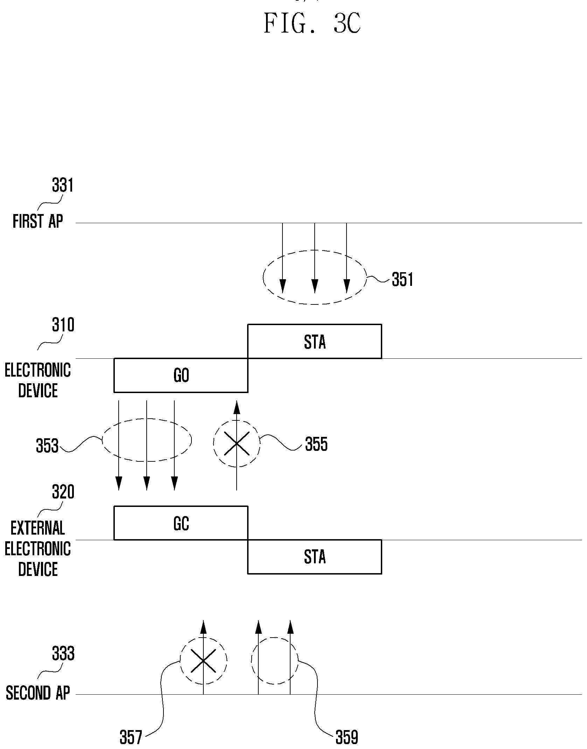

The first channel 335 used for data exchange between the first AP 331 and the electronic device 310, the second channel 337 used for data exchange between the second AP 333 and the external electronic device 320, and the third channel 339 used for data exchange between the electronic device 310 and the external electronic device 320 may have frequency bands different from each other (or different channel numbers). In the case in which the first channel 335, the second channel 337, and the third channel 339 have different channel numbers (or frequency bands), a phenomenon in which reception of a signal transmitted via each channel fails may occur. A detailed description thereof will be provided with reference to FIG. 3C.

FIG. 3C is a diagram illustrating an embodiment in which a first electronic device and a second electronic device receive signals according to various embodiments of the disclosure.

The first electronic device (e.g., the electronic device 310 of FIG. 3A) may operate as a GO via a group owner (GO) negotiation with the second electronic device (e.g., the external electronic device 320 of FIG. 3A). The GO may be an entity that performs a function of an AP in IEEE 802.11. The external electronic device 320 may operate as a group client (GC) via the GO negotiation with the electronic device 310. The GC may be an entity that performs a function of a STA defined in IEEE 802.11.

The electronic device 310 may broadcast a beacon 353 while operating as a GO. The beacon 353 may include information for data transmission between the electronic device 310 and the external electronic device 320. The external electronic device 320 may receive a beacon, and, based on information for data transmission included in the beacon, may perform data transmission and/or reception with the electronic device 310.

The electronic device 310 that operates as a GO may switch to an STA for communication with the first AP 331. After switching to the STA, the electronic device 310 may receive a beacon 351 that the first AP 331 transmits, and, based on information that is for data transmission between the electronic device 310 and the first AP 331 and is included in the beacon 351, may perform data transmission or reception with the first AP 331.

In the case in which the first channel 335 used for data exchange between the first AP 331 and the electronic device 310 and the third channel 339 used for data exchange between the electronic device 310 and the external electronic device 320 are in different frequency bands, the electronic device 310 may be switched from a state of transmitting and/or receiving a signal of the frequency band corresponding to the third channel 339 to a state of transmitting and/or receiving a signal of a frequency band corresponding to the first channel 335. The electronic device 310 may switch an operation mode of a communication circuit (e.g., the wireless communication module 190 of FIG. 1) that supports short-distance wireless communication in order to transmit and/or receive a signal of a different frequency band, and a situation in which reception of a signal 355 transmitted via the first channel 335 fails may occur while the operation mode of the communication circuit is switched.

The external electronic device 320 may receive the beacon 353 that the electronic device 310 broadcasts, while operating as a GC. The beacon 353 may include information for data transmission between the electronic device 310 and the external electronic device 320. The external electronic device 320 may receive a beacon, and, based on information for data transmission included in the beacon, may perform data transmission and/or reception with the electronic device 310.

The second electronic device 310 that operates as a GC may switch to an STA for communication with the second AP 333. After switching to the GC, the electronic device 310 may receive a beacon 359 that the second AP 333 transmits, and, based on information that is for data transmission between the external electronic device 320 and the second AP 333 and is included in the beacon 359, may perform data transmission or reception with the second AP 333.

In the case in which the second channel 337 used for data exchange between the second AP 333 and the external electronic device 320 and the third channel 339 used for data exchange between the electronic device 310 and the external electronic device 320 are in different frequency bands, the external electronic device 320 may switch from a state of transmitting and/or receiving a signal of a frequency band corresponding to the third channel 339 to a state of transmitting and/or receiving a signal of a frequency band corresponding to the second channel 337. The external electronic device 320 may switch an operation mode of a communication circuit (e.g., the wireless communication module 190 of FIG. 1) that supports short-distance wireless communication in order to transmit and/or receive a signal of a different frequency band, and a situation (e.g., 3-way channel concurrency) in which reception of a signal 357 transmitted via the second channel 337 fails may occur while the operation mode of the communication circuit is switched.

In order to prevent the above-described situation, the electronic device 310 and/or the external electronic device 320 may set a channel number (or frequency band) of the third channel 339 to the number (or frequency band) same as the channel number (or frequency band) of the first channel 335 and/or second channel 337.

In this instance, in the case in which the frequency band of the first channel 335 and/or the frequency band of the second channel 337 is a relatively low frequency band, data transmission and/or reception speed via the third channel 339 may be decreased. Although the electronic device 310 and the external electronic device 320 support short-distance wireless communication that use a high frequency band that is capable of providing a relatively high transmission and/or reception speed, when a channel of a relatively low frequency band is used, the quality of service may deteriorate.

Hereinafter, an embodiment of selecting a channel between the electronic device 310 and the external electronic device 320 with reference to an attribute of an application that performs a service via short-distance wireless communication will be described.

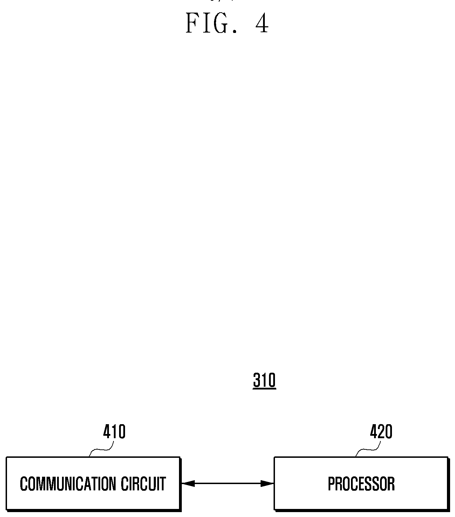

FIG. 4 is a block diagram of an electronic device according to various embodiments of the disclosure.

According to various embodiments of the disclosure, the electronic device (e.g., the electronic device 310 of FIG. 3) may include a communication circuit 410 (e.g., the wireless communication module 192 of FIG. 1) and a processor 420 (e.g., the processor 120 of FIG. 1).

The communication circuit 410 may include various circuit structures used for modulating and/or demodulating a signal in the electronic device 310. For example, the communication circuit 410 may modulate a baseband signal into a radio frequency (RF) band signal so that the signal is output via an antenna (not illustrated), or may demodulate an RF band signal received via an antenna into a baseband signal and transmit the same to the processor 420.

The communication circuit 410 may perform short-distance wireless communication via a first frequency band (e.g., 2.4 GHz), a second frequency band (e.g., 5 GHz) that is a frequency band higher than the first frequency band, and/or a third frequency band (e.g., 6 GHz) that is a frequency band higher than the second frequency band.

The communication circuit 410 may be connected to a first AP (e.g., the first AP 331 of FIG. 3A) via one of a plurality of frequency bands including the first frequency band, the second frequency band, and/or the third frequency band, and may transmit data to the first AP 331 or may receive data transmitted from the first AP 331.

The communication circuit 410 may be connected to an external electronic device (e.g., the external electronic device 320 of FIG. 3A) via one of a plurality of frequency bands including the first frequency band, the second frequency band, and/or the third frequency band, and may transmit data to the external electronic device 320 or may receive data transmitted from the external electronic device 320.

The communication circuit 410 may be the communication circuit 410 that supports a function (e.g., a real simultaneous dual band (RSDB) and/or a dual band simultaneous (DBS)) capable of performing transmission and/or reception of signals simultaneously via at least two frequency bands of the plurality of frequency bands. For example, the communication circuit 410 may perform signal transmission and/or reception via the second frequency band while performing signal transmission and/or reception via the first frequency band. As another example, the communication circuit 410 may perform signal transmission and/or reception via the third frequency band while performing signal transmission and/or reception via the first frequency band. As another example, the communication circuit 410 may perform signal transmission and/or reception via the third frequency band while performing signal transmission and/or reception via the second frequency band. The processor 420 may store simultaneous transmission and/or reception capability (e.g., whether simultaneous transmission and/or reception of signals of the first frequency band and the second frequency band are supportable) of the communication circuit 410 in a memory (e.g., the memory 130 of FIG. 1).

Based on control performed by the processor 420, the communication circuit 410 may perform an operation of receiving a signal that the external electronic device 320 transmits. The communication circuit 410 may control component elements (e.g., a low-noise amplifier, a switch, and/or a filter) of the communication circuit 410 so as to receive, from the processor 420, a signal that requests transmission and/or reception of data via a predetermined channel and so as to receive a signal via a frequency band corresponding to the predetermined channel.

The processor 420 may receive data transmitted from an application processor (e.g., the processor 120 of FIG. 1) and may produce a packet for transmitting the received data to the external electronic device 320. The processor 420 may be defined as a communication processor (or a communication processor) included in a communication module (e.g., the wireless communication module 192 of FIG. 1). According to an embodiment, the processor 420 may perform channel coding based on the data transmitted by the application processor 120 so as to produce a packet, may identify whether an error is present in at least part of data transmitted by the external electronic device 320, or may perform an error recovery (e.g., hybrid auto repeat request (HARQ)) when an error is incurred.

The processor 420 may be operatively connected to the communication circuit 410, so as to control operation of the communication circuit 410.

The processor 420 may execute an application installed in a memory (e.g., the memory 130 of FIG. 1) of the electronic device 310. The executed application may be an application that performs a predetermined service (e.g., content sharing and/or data transmission) via short-distance wireless communication. As the application is executed, the processor 420 may perform discovery (e.g., P2P discovery) of the external electronic device 320 to be connected to the electronic device 310 via short-distance wireless communication.

As a part of a discovery procedure, the processor 420 may control the communication circuit 410 so as to broadcast a probe request message. The probe request message may include the device name of the electronic device 310, and the identification information of the application executed in the electronic device 310. The external electronic device 320 that receives the probe request message may transmit a probe response message to the electronic device 310. The probe response message may include the device name of the external electronic device 320, and the identification information of an application executed in the external electronic device 320. The processor 420 may receive the probe response message and may select, based on information included in the probe response message, an external electronic device (e.g., the external electronic device 320) to be connected.

Before (or while) performing a group owner (GO) negotiation procedure with the selected external electronic device, the processor 420 may select a preferred frequency band and/or a preferred channel of the electronic device 310.

Based on the simultaneous transmission and/or reception capability of the communication circuit 410 and a frequency band of a channel connected to the first AP 331, the processor 420 may select a preferred frequency band and/or preferred channel of the electronic device 310.

In the state in which the electronic device 310 is connected to the first AP 331, the processor 420 may select, as a preferred frequency band, a frequency band (e.g., a second frequency band) of a signal that is capable of being transmitted and/or received simultaneously with a signal of the frequency band (e.g., a first frequency band) of a channel connected between the first AP 331 and the electronic device 310. In the case in which the channel established between the electronic device 310 and the external electronic device 320 is a channel existing in the preferred frequency band (e.g., the second frequency band), the electronic device 310 may transmit or receive signals of the first frequency band and the second frequency band, simultaneously. Therefore, the electronic device 310 may decrease deterioration in performance that occurs due to a connection to the external electronic device 320.

In the state in which the electronic device 310 is connected to the first AP 331, the processor 420 may select, as a preferred channel, a channel included in the frequency band of a signal that is capable of being transmitted and/or received simultaneously with a signal of the frequency band (e.g., the first frequency band) of the channel connected between the first AP 331 and the electronic device 310. In the case in which the frequency band of the channel connected to the first AP 331 is the highest frequency band among the frequency bands in which simultaneous transmission and/or reception of the communication circuit 410 is available, the processor 420 may select a channel connected to the first AP 331 as a preferred channel. In the case in which the channel established between the electronic device 310 and the external electronic device 320 is a preferred channel, the electronic device 310 may transmit or receive signals of the first frequency band and the second frequency band, simultaneously. Therefore, the electronic device 310 may decrease deterioration in performance that occurs due to a connection to the external electronic device 320.

The processor 420 may identify a frequency band (e.g., the first frequency band and/or second frequency band) in which simultaneous transmission and/or reception of the communication circuit 410 is available, and may select, as a preferred frequency band, a frequency band (e.g., the second frequency band) higher than the frequency band (e.g., the first frequency band) of the channel connected to the first AP 331. In the case in which the frequency band of the channel connected to the first AP 331 is the highest frequency band among the frequency bands in which simultaneous transmission and/or reception of the communication circuit 410 is available, the processor 420 may select the frequency band of the channel connected to the first AP 331 as a preferred frequency band.

In the state in which the electronic device 310 is not connected to the first AP 331, the processor 420 may select, as a preferred channel, a channel of the highest frequency band among the frequency bands supportable by the electronic device 310.

The processor 420 may perform GO negotiation with the selected external electronic device 320 when selecting a preferred channel and/or preferred frequency band is completed.

The processor 420 may control the communication circuit 410 so as to transmit a GO negotiation request message to the external electronic device 320 as a part of the GO negotiation.

The GO negotiation request message may include P2P IE information and WSC IE information. The P2P IE information may include a GO intent and operating channel attribute information to be used for determining a GO. The operating channel attribute may include preferred channel information that is information related to a channel that the electronic device 310 prefers among the channels capable of being established between the electronic device 310 and the external electronic device 320, and/or preferred frequency band information that is information related to a frequency band that the electronic device 310 prefers. The preferred channel information may be included in a channel number field of an operating channel attribute field. The preferred frequency band information may be included in an operating class field of the operating channel attribute field.

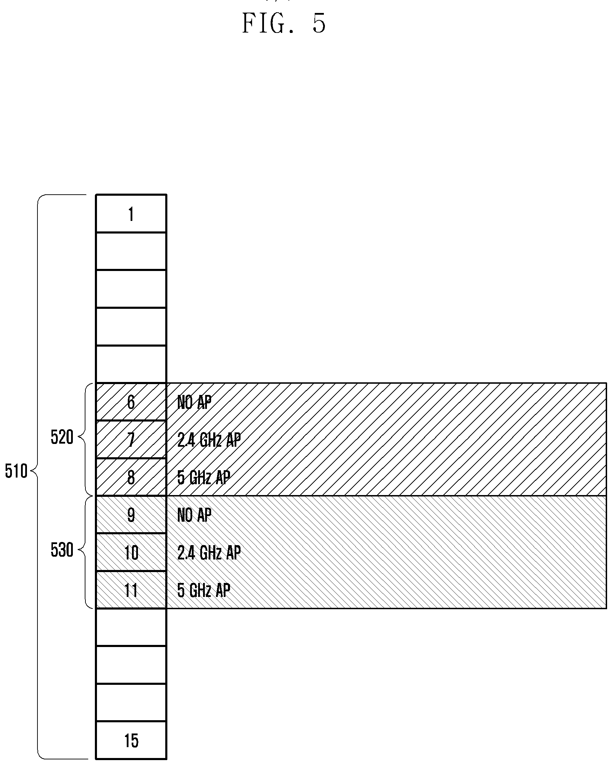

Based on the frequency band of the channel established between the electronic device 310 and an AP (e.g., the first AP 331) connected to the electronic device 310, and simultaneous transmission and/or reception capability of the communication circuit 410, the processor 420 may set a GO intent value. The processor 420 may set a GO intent value to be different based on the frequency band of the channel of the AP (e.g., the first AP 331) connected to the electronic device 310, and simultaneous transmission and/or reception capability of the communication circuit 410. An embodiment associated with setting of the GO intent value will be described with reference to FIG. 5. Based on a GO intent value included in the GO negotiation request message, the external electronic device 420 may identify state information of the electronic device 310 (e.g., frequency band information of the channel established between the electronic device 310 and the first AP 331 and/or simultaneous transmission and/or reception capability of the communication circuit 410 of the electronic device 310).

To transmit, to the external electronic device 320, the channel information of the first AP 331 connected to the electronic device 310, the processor 420 may include the channel information of the first AP 331 in a channel number field of an operating channel attribute field.

The processor 420 may receive a GO negotiation response message in response to the GO negotiation request message.

The GO negotiation response message may include P2P IE information and WSC IE information. The P2P IE information may include a GO intent and operating channel attribute information to be used for determining a GO. The operating channel attribute may include preferred channel information that is information related to a channel that the external electronic device 320 prefers among the channels capable of being established between the electronic device 310 and the external electronic device 320, and/or preferred frequency band information that is information related to a frequency band that the external electronic device 320 prefers. The preferred channel information may be included in a channel number field of an operating channel attribute field. The preferred frequency band information may be included in an operating class field of the operating channel attribute field.

The GO intent value included in the GO negotiation response message may differ depending on a channel frequency band of an AP (e.g., the second AP 333) connected to the external electronic device 320 and simultaneous transmission and/or reception capability of the external electronic device 320. Based on the GO intent value included in the GO negotiation response message, the processor 410 may identify state information of the external electronic device 320 (e.g., frequency band information of the channel established between the external electronic device 320 and the second AP 333 and/or simultaneous transmission and/or reception capability of the external electronic device 320).

The channel number field included in the GO negotiation response message may include the channel number of the AP (e.g., the second AP 333) connected to the external electronic device 320.

The processor 420 may compare the GO intent value included in the GO negotiation response message and the GO intent value produced by the electronic device 400 (or a GO intent value included in the GO negotiation request message), and may perform, based on a comparison result, a GO function. An electronic device that transmits a higher GO intent value may be determined to be a group owner (GO), and an electronic device that transmits a lower GO intent value may be determined to be a group client (GC). The GO may operate as a host in a short-distance wireless communication system, and the GC may operate as a client. For ease of description, it is assumed that the electronic device 310 performs as a GO in the disclosure.

After the GO negotiation, the processor 420 may select a channel to be established between the electronic device 310 and the external electronic device 320. The processor 420 may select a channel based on performance information of the external electronic device 320 and the attribute of an application.

Based on the GO negotiation response message, the processor 420 may identify the performance information of the external electronic device 320. The performance information of the external electronic device 320 may include performance information related to whether the external electronic device 320 supports simultaneous transmission and/or reception of signals of different frequency bands (e.g., a first frequency band, a second frequency band, and/or a third frequency band).

According to an embodiment, the processor 420 may identify, based on the GO intent value included in the GO negotiation response message, the performance information of the external electronic device 320.

According to an embodiment, the processor 420 may identify the performance information of the external electronic device 320 with reference to the operating channel attribute field.

According to another embodiment, the processor 420 may identify the performance information of the external electronic device 320 with reference to a vender specific information element (VSIE) included in a signal transmitted during GO negotiation or during a discovery procedure performed before the GO negotiation.

The processor 420 may identify the attribute of an application being executed. The attribute of the application may differ depending on whether the application provides a service that requires high quality of service (QoS) and/or whether the application provides a service that requires a high transmission speed and/or reception speed.

For example, an application (e.g., miracast, music share, or camera control) that provides a service (e.g., image content sharing or sound content sharing) which requires high QoS may have a first attribute that indicates provision of a service that requires high QoS. An application (e.g., smart switch, quick share, nearby share, or music transfer) that provides a service (e.g., file sharing) which requires a high transmission speed and/or reception speed may have a second attribute indicating provision of a service that requires a high transmission speed and/or reception speed.

Based on the attribute of the application and the performance information of the external electronic device 320, the processor 420 may select a channel to be used for connecting the electronic device 310 and the external electronic device 320. Alternatively, based on the attribute of the application and the performance information of the external electronic device 320, the processor 420 may select a frequency band to be used for connecting the electronic device 310 and the external electronic device 320.

According to an embodiment, upon identifying that the attribute of the application is the first attribute, the processor 420 may select a channel between the electronic device 310 and the external electronic device 320 with reference to channel information of the first AP 331 connected to the electronic device 310 and/or channel information of the second AP 333 connected to the external electronic device 320. The processor 420 may select between the channel established between the electronic device 310 and the first AP 331 and the channel established between the external electronic device 320 and the second AP 333. In the case in which the channel established between the electronic device 310 and the first AP 331 and the channel established between the electronic device 310 and the external electronic device 320 are identical, the electronic device 310 may be capable of preventing a phenomenon in which data transmission and/or reception is temporarily unavailable and which occurs due to a change of a channel, thereby securing high QoS.

According to an embodiment, upon identifying that the attribute of the application is the second attribute, the processor 420 may select a channel of a higher frequency band between a frequency band in which the electronic device 310 is capable of performing simultaneous transmission and/or reception and a frequency band in which the external electronic device 320 is capable of performing simultaneous transmission and/or reception. The electronic device 310 may perform data transmission and/or reception with the external electronic device 320 via a channel of a high frequency band in which a relatively high transmission and/or reception speed is provided, thereby improving the quality of a service provided by the application.

FIG. 5 is a diagram illustrating a GO intent included in a GO negotiation request message and/or GO negotiation response message that an electronic device transmits or receives according to various embodiments of the disclosure.

Referring to FIG. 5, a GO intent may be one of the numbers (e.g., 1 to 15) falling within a designated range 510.

Based on the frequency band of a channel established between the electronic device 310 and an AP (e.g., the first AP 331) connected to the electronic device 310, and simultaneous transmission and/or reception capability of the communication circuit 410, the electronic device (e.g., the electronic device 310 of FIG. 4) may set a GO intent value. The electronic device 310 may set a GO intent value to be different based on the frequency band of the channel of the AP (e.g., the first AP 331) connected to the electronic device 310, and simultaneous transmission and/or reception capability of a communication circuit (e.g., the communication circuit 410 of FIG. 4).

According to an embodiment, in the case in which the communication circuit 410 is incapable of performing simultaneous transmission and/or reception of a signal of the first frequency band and a signal of the second frequency band, the electronic device 310 may set any one of the values (e.g., 6 to 8) falling within a designated range 520 as a GO intent value.

The electronic device 310 may set a GO intent value to be different based on whether the electronic device 310 is connected to an AP (e.g., the first AP 331), and/or the frequency band of the channel between the first AP 331 and the electronic device 310.

According to an embodiment, when identifying that the communication circuit 410 is incapable of performing simultaneous transmission and/or reception of a signal of the first frequency band and a signal of the second frequency band, and is not connected to the AP 331, the electronic device 310 may set any one (e.g., 6) of the values falling within the designated range 520 as a GO intent value.

According to an embodiment, when identifying that the communication circuit 410 is incapable of performing simultaneous transmission and/or reception of a signal of the first frequency band and a signal of the second frequency band, and a channel between the first AP 331 and the electronic device 310 is the first frequency band, the electronic device 310 may set another one (e.g., 7) of the values falling within the designated range 520 as a GO intent value.

According to an embodiment, when identifying that the communication circuit 410 is incapable of performing simultaneous transmission and/or reception of a signal of the first frequency band and a signal of the second frequency band, and the frequency band of the channel between the first AP 331 and the electronic device 310 is the second frequency band, the electronic device 310 may set any one (e.g., 8) of the values falling within the designated range 520 as a GO intent value.

According to an embodiment, in the case in which the communication circuit 410 is capable of performing simultaneous transmission and/or reception of a signal of the first frequency band and a signal of the second frequency band, the electronic device 310 may set any one of the values (e.g., 9 to 11) falling within a designated range 530 as a GO intent value.

According to an embodiment, when identifying that the communication circuit 410 is capable of performing simultaneous transmission and/or reception of a signal of the first frequency band and a signal of the second frequency band, and is not connected to the AP 331, the electronic device 310 may set any one (e.g., 9) of the values falling within the designated range 530 as a GO intent value.

According to an embodiment, when identifying that the communication circuit 410 is capable of performing simultaneous transmission and/or reception of a signal of the first frequency band and a signal of the second frequency band, and the frequency band of the channel between the first AP 331 and the electronic device 310 is the first frequency band, the electronic device 310 may set another one (e.g., 10) of the values falling within the designated range 530 as a GO intent value.

According to an embodiment, when identifying that the communication circuit 410 is capable of performing simultaneous transmission and/or reception of a signal of the first frequency band and a signal of the second frequency band, and the frequency and of the channel between the first AP 331 and the electronic device 310 is the second frequency band, the electronic device 310 may set any one (e.g., 11) of the values falling within the designated range 530 as a GO intent value.

The above-described scheme is merely an example, and the GO intent value may be changed depending on the performance information of the electronic device 310 and/or the frequency band of the channel between the first AP 331 and the electronic device 310. For example, in the case in which simultaneous transmission and/or reception of a signal of the first frequency band and a signal of a third frequency band is available, the electronic device 310 may set any one of the values (e.g., 1 to 3) falling within another designated range as a GO intent value. For example, in the case in which simultaneous transmission and/or reception of a signal of the second frequency band and a signal of the third frequency band is available, the electronic device 310 may set any one of the values (e.g., 12 to 14) falling within another designated range as a GO intent value. As another example, in the case in which simultaneous transmission and/or reception of a signal of the first frequency band and a signal of the second frequency band and/or third frequency band is available, the electronic device 310 may set any one of the values (e.g., 15) falling within another designated range as a GO intent value.

With reference to a GO intent value, the external electronic device 320 may obtain performance information of the electronic device 310 and/or information associated with the frequency band of the channel between the electronic device 310 and the first AP 331 connected to the electronic device 310.

In the same manner, a GO intent value included in a GO negotiation response message may also differ based on the performance information of the external electronic device 320 and/or the frequency band of the channel between the second AP 333 and the external electronic device 320. With reference to a GO intent value, the electronic device 310 may obtain performance information of the external electronic device 320 and/or information associated with the frequency band of the channel between the external electronic device 320 and the second AP 333 connected to the external electronic device 320.

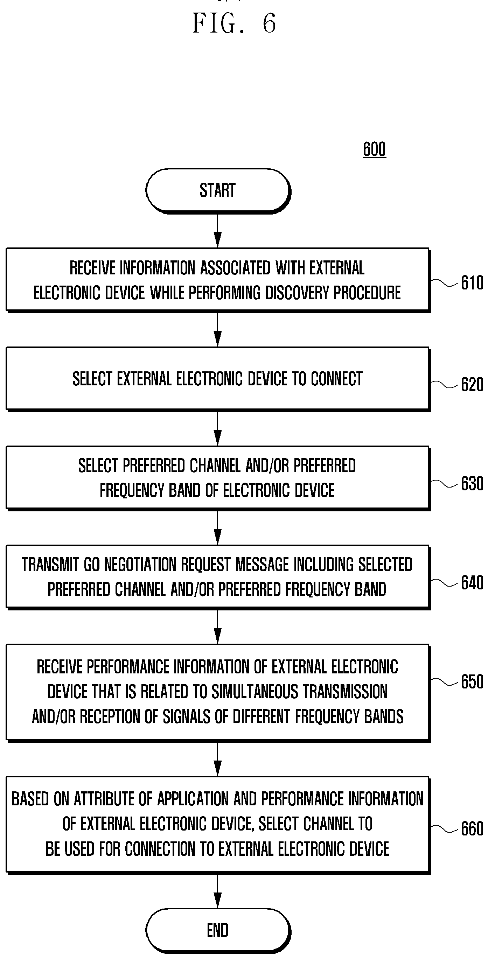

FIG. 6 is a flowchart illustrating an operation method 600 of an electronic device according to various embodiments of the disclosure.

While performing a discovery procedure for discovering an external electronic device (e.g., the external electronic device 320 of FIG. 3A) to be connected to an electronic device (e.g., the electronic device 310 of FIG. 4), the electronic device 310 may receive information associated with the external electronic device 320 in operation 610.

The electronic device 310 may execute an application installed in a memory (e.g., the memory 130 of FIG. 1) of the electronic device 310. The executed application may be an application that performs a predetermined service (e.g., content sharing and/or data transmission) via short-distance wireless communication. As the application is executed, the electronic device 310 may perform discovery (e.g., P2P discovery) of the external electronic device 320 to be connected to the electronic device 310 via short-distance wireless communication.

As a part of the discovery procedure, the electronic device 310 may control the communication circuit 410 so as to broadcast a probe request message. The probe request message may include the device name of the electronic device 310, and the identification information of the application executed in the electronic device 310. The external electronic device 320 that receives the probe request message may transmit a probe response message to the electronic device 310. The probe response message may include the device name of the external electronic device 320, and the identification information of an application executed in the external electronic device 320.

In operation 620, the electronic device 310 may select the external electronic device 320 to connect to.

The electronic device 310 may receive the probe response message and may select, based on information included in the probe response message, the external electronic device 320 to connect to.

In operation 630, the electronic device 310 may select a preferred channel and/or a preferred frequency band of the electronic device 310.

Based on the simultaneous transmission and/or reception capability of the communication circuit 410 and the frequency band of a channel connected to the first AP 331, the electronic device 310 may select a preferred frequency band and/or preferred channel.

In the state in which the electronic device 310 is connected to the first AP 331, the electronic device 310 may select, as a preferred frequency band, the frequency band (e.g., a second frequency band) of a signal that is capable of being transmitted and/or received simultaneously with a signal of the frequency band (e.g., a first frequency band) of the channel connected between the first AP 331 and the electronic device 310. In the case in which a channel established between the electronic device 310 and the external electronic device 320 is a channel existing in the preferred frequency band (e.g., the second frequency band), the electronic device 310 may be capable of transmitting or receiving signals of the first frequency band and the second frequency band, simultaneously. Therefore, the electronic device 310 may decrease deterioration in performance that occurs due to a connection to the external electronic device 320.

In the state in which the electronic device 310 is connected to the first AP 331, the electronic device 310 may select, as a preferred channel, a channel included in the frequency band of a signal that is capable of being transmitted and/or received simultaneously with a signal of the frequency band (e.g., the first frequency band) of the channel connected between the first AP 331 and the electronic device 310. In the case in which the frequency band of the channel connected to the first AP 331 is the highest frequency band among the frequency bands in which simultaneous transmission and/or reception of the communication circuit 410 is available, the electronic device 310 may select the channel connected to the first AP 331 as a preferred channel. In the case in which the channel established between the electronic device 310 and the external electronic device 320 is a preferred channel, the electronic device 310 may transmit or receive signals of the first frequency band and the second frequency band, simultaneously. Therefore, the electronic device 310 may decrease deterioration in performance that occurs due to a connection to the external electronic device 320.

The electronic device 310 may identify a frequency band (e.g., the first frequency band and/or second frequency band) in which simultaneous transmission and/or reception of the communication circuit 410 is available, and may select, as a preferred frequency band, a frequency band (e.g., the second frequency band) higher than the frequency band (e.g., the first frequency band) of the channel connected to the first AP 331. In the case in which the frequency band of the channel connected to the first AP 331 is the highest frequency band among the frequency bands in which simultaneous transmission and/or reception of the communication circuit 410 is available, the electronic device 310 may select the frequency band of the channel connected to the first AP 331 as a preferred frequency band. By setting a preferred channel and/or a preferred frequency band, the electronic device 310 may transmit, to the external electronic device 320, information associated with the frequency band of the channel connected to the first AP 331 and information associated with a frequency band distinguished as a frequency band in which simultaneous transmission and/or reception available.

In the state in which the electronic device 310 is not connected to the first AP 331, the electronic device 310 may select, as a preferred channel, a channel of the highest frequency band among the frequency bands supportable by the electronic device 310.

In operation 640, the electronic device 310 may transmit a group owner (GO) negotiation request message including the selected preferred channel and/or the preferred frequency band.

The electronic device 310 may perform GO negotiation with the selected external electronic device 320 when selecting the preferred channel and/or preferred frequency band is completed.

As a part of the GO negotiation, the electronic device 310 may control the communication circuit 410 so as to transmit the GO negotiation request message to the external electronic device 320.

The GO negotiation request message may include P2P IE information and WSC IE information. The P2P IE information may include a GO intent and operating channel attribute information to be used for determining a GO. The operating channel attribute may include preferred channel information that is information related to a channel that the electronic device 310 prefers among the channels capable of being established between the electronic device 310 and the external electronic device 320, and/or preferred frequency band information that is information related to a frequency band that the electronic device 310 prefers. The preferred channel information may be included in a channel number field of an operating channel attribute field. The preferred frequency band information may be included in an operating class field of the operating channel attribute field.

Based on the frequency band of a channel established between the electronic device 310 and an AP (e.g., the first AP 331) connected to the electronic device 310, and simultaneous transmission and/or reception capability of the communication circuit 410, the electronic device 310 may set a GO intent value. The electronic device 310 may set a GO intent value to be different based on the frequency band of the channel of the AP (e.g., the first AP 331) connected to the electronic device 310, and simultaneous transmission and/or reception capability of the communication circuit 410. Based on the GO intent value included in the GO negotiation request message, the external electronic device 420 may identify state information of the electronic device 310 (e.g., frequency band information of the channel established between the electronic device 310 and the first AP 331 and/or simultaneous transmission and/or reception capability of the communication circuit 410 of the electronic device 310).

To transmit, to the external electronic device 320, the channel information of the first AP 331 connected to the electronic device 310, the electronic device 310 may include the channel information of the first AP 331 in the channel number field of the operating channel attribute field.

In operation 650, the electronic device 310 may receive performance information of the external electronic device 320 related to simultaneous transmission and/or reception of signals of different frequency bands.

The electronic device 310 may receive a GO negotiation response message in response to the GO negotiation request message.

The GO negotiation response message may include P2P IE information and WSC IE information. The P2P IE information may include a GO intent and operating channel attribute information to be used for determining a GO. The operating channel attribute may include preferred channel information that is information related to a channel that the external electronic device 320 prefers among the channels capable of being established between the electronic device 310 and the external electronic device 320, and/or preferred frequency band information that is information related to a frequency band that the external electronic device 320 prefers. The preferred channel information may be included in a channel number field of an operating channel attribute field. The preferred frequency band information may be included in an operating class field of the operating channel attribute field.

The GO intent value included in the GO negotiation response message may differ depending on the channel frequency band of an AP (e.g., the second AP 333) connected to the external electronic device 320 and simultaneous transmission and/or reception capability of the external electronic device 320. Based on the GO intent value included in the GO negotiation response message, the electronic device 310 may identify state information of the external electronic device 320 (e.g., frequency band information of the channel established between the external electronic device 320 and the second AP 333 and/or simultaneous transmission and/or reception capability of the external electronic device 320).

The channel number field included in the GO negotiation response message may include the channel number of the AP (e.g., the second AP 333) connected to the external electronic device 320.

The electronic device 310 may compare the GO intent value included in the GO negotiation response message and the GO intent value (or the GO intent value included in the GO negotiation request message) produced by the electronic device 310, and may perform, based on a comparison result, a GO function. An electronic device that transmits a higher GO intent value may be determined to be a group owner (GO), and an electronic device that transmits a lower GO intent value may be determined to be a group client (GC). The GO may operate as a host in a short-distance wireless communication system, and the GC may operate as a client. For ease of description, it is assumed that the electronic device 310 performs as a GO in the disclosure.

According to an embodiment, the electronic device 310 may identify the performance information of the external electronic device 320 with reference to the operating channel attribute field.

According to another embodiment, the electronic device 310 may identify the performance information of the external electronic device 320 with reference to a vender specific information element (VSIE) included in a signal transmitted during GO negotiation or during a discovery procedure performed before the GO negotiation.

In operation 660, based on the attribute of the application and the performance information of the external electronic device 320, the electronic device 310 may select a channel to be used for connection between the external electronic device 320 and the electronic device 310.

The electronic device 310 may identify the attribute of the application being executed. The attribute of the application may differ depending on whether the application provides a service that requires high quality of service (QoS) and/or whether the application provides a service that requires a high transmission speed and/or reception speed.

For example, an application (e.g., miracast, music share, or camera control) that provides a service (e.g., image content sharing or sound content sharing) which requires high QoS may have a first attribute that indicates provision of a service that requires high QoS. An application (e.g., smart switch, quick share, nearby share, or music transfer) that provides a service (e.g., file sharing) which requires a high transmission speed and/or reception speed may have a second attribute indicating provision of a service that requires a high transmission speed and/or reception speed.

Based on the attribute of the application and the performance information of the external electronic device 320, the electronic device 310 may select a channel to be used for connection between the electronic device 310 and the external electronic device 320.

According to an embodiment, upon identifying that the attribute of the application is the first attribute, the electronic device 310 may select a channel between the electronic device 310 and the external electronic device 320 with reference to channel information of the first AP 331 connected to the electronic device 310 and/or channel information of the second AP 333 connected to the external electronic device 320. The electronic device 310 may select between the channel established between the electronic device 310 and the first AP 331 and the channel established between the external electronic device 320 and the second AP 333. In the case in which the channel established between the electronic device 310 and the first AP 331 and the channel established between the electronic device 310 and the external electronic device 320 are identical, the electronic device 310 may be capable of preventing a phenomenon in which data transmission and/or reception is temporarily unavailable and which occurs due to a change of a channel, thereby securing high QoS.

According to an embodiment, upon identifying that the attribute of the application is the second attribute, the electronic device 310 may select a channel of a higher frequency band between a frequency band in which the electronic device 310 is capable of performing simultaneous transmission and/or reception and a frequency band in which the external electronic device 320 is capable of performing simultaneous transmission and/or reception. The electronic device 310 may perform data transmission and/or reception with the external electronic device 320 via a channel of a high frequency band in which a relatively high transmission and/or reception speed is provided, thereby improving the quality of a service provided by the application.

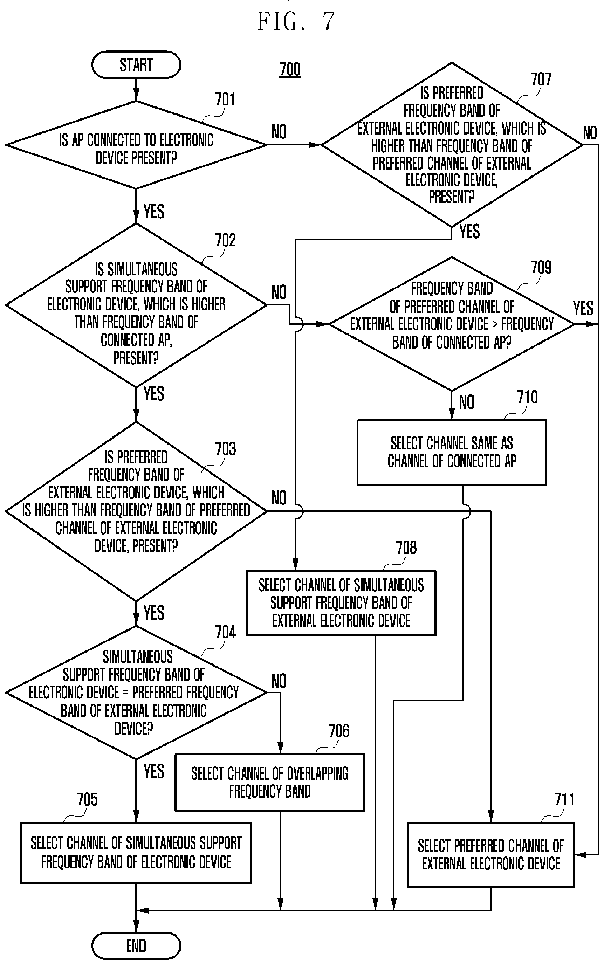

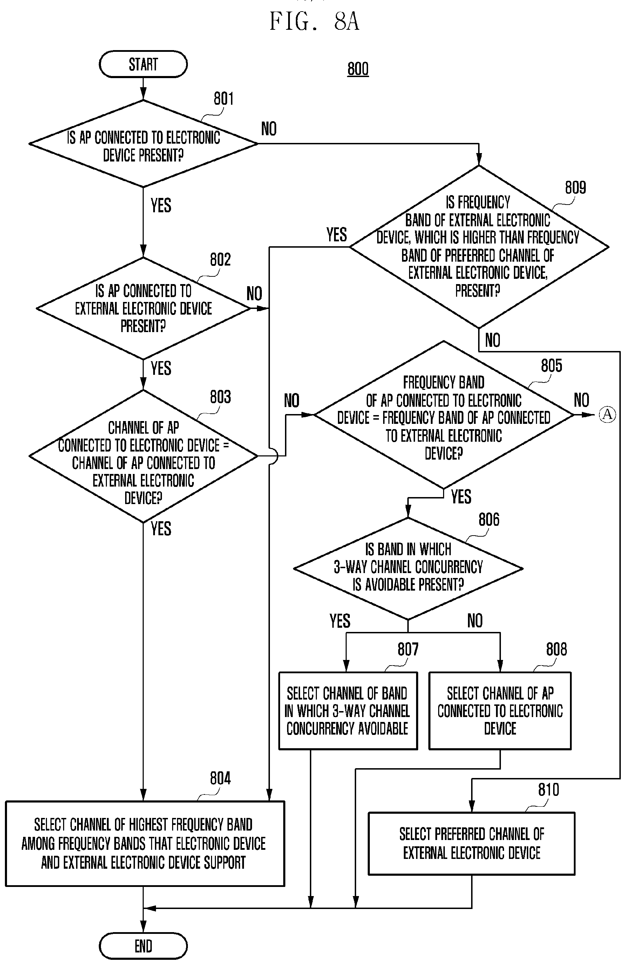

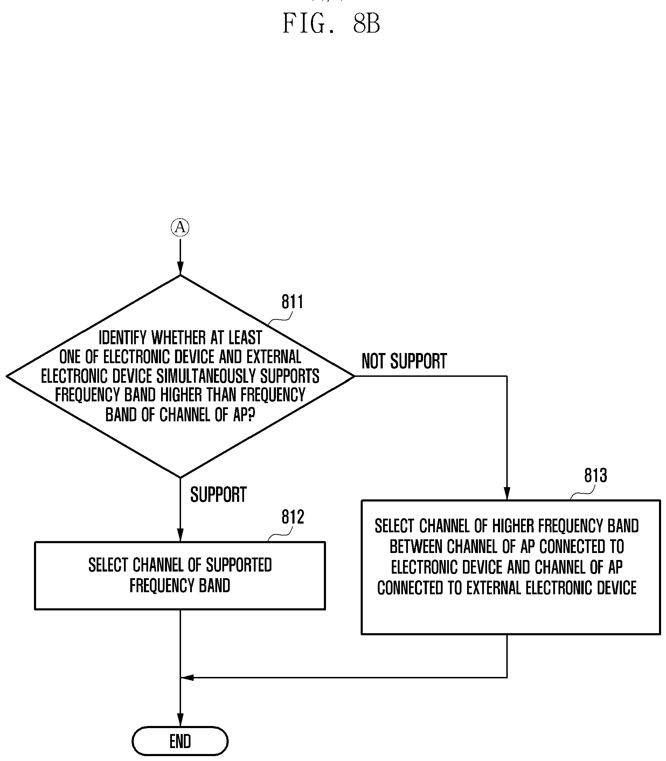

A detailed embodiment that selects a channel will be described below with reference to FIG. 7, FIG. 8A, and FIG. 8B.

FIG. 7 is a flowchart 700 illustrating an operation of selecting a channel to be connected to an external electronic device, by an electronic device according to various embodiments of the disclosure.

Hereinafter, a description is provided on the assumption that an electronic device (e.g., the electronic device 310 of FIG. 4) performs group owner (GO) negotiation with an external electronic device (e.g., the external electronic device 320 of FIG. 3A), the electronic device 310 performs a GO function, and the external electronic device 320 performs a group client (GC) function.

Based on the attribute of the application and the performance information of the external electronic device 320, the electronic device 310 may select a channel to be established between the electronic device 310 and the external electronic device 320.

The electronic device 310 may identify the attribute of the application being executed. The attribute of the application may differ depending on whether the application provides a service that requires high quality of service (QoS) and/or whether the application provides a service that requires a high transmission speed and/or reception speed.

For example, an application (e.g., miracast, music share, or camera control) that provides a service (e.g., image content sharing or sound content sharing) which requires high QoS may have a first attribute that indicates provision of a service that requires high QoS. An application (e.g., smart switch, quick share, nearby share, or music transfer) that provides a service (e.g., file sharing) which requires a high transmission speed and/or reception speed may have a second attribute indicating provision of a service that requires a high transmission speed and/or reception speed.

Based on the attribute of the application and the performance information of the external electronic device 320, the electronic device 310 may select a channel to be used for connection between the electronic device 310 and the external electronic device 320.

According to an embodiment, upon identifying that the attribute of the application is the first attribute, the electronic device 310 may select a channel between the electronic device 310 and the external electronic device 320 with reference to channel information of the first AP 331 connected to the electronic device 310 and/or channel information of the second AP 333 connected to the external electronic device 320.

A policy used for selecting a channel in order to perform a service that requires high QoS may be a policy that minimizes deterioration in QoS that may occur due to a change of a channel. A policy for channel selection described hereinafter may be a policy that selects a channel of a relatively high frequency band in consideration of the simultaneous support frequency band of the electronic device 310 and/or the simultaneous support frequency band of the external electronic device 320, while maintaining QoS at the maximum. The embodiment described below in association with channel selection may provide a relatively high transmission speed and/or reception speed by selecting a channel of a relatively high frequency band.

The embodiment related to channel selection described with reference to FIG. 7 may be applicable when the attribute of an application being executed is the first attribute.

Referring to FIG. 7, the electronic device (e.g., the electronic device 310 of FIG. 4) may identify whether an AP (e.g., the first AP 331 of FIG. 3A) connected to the electronic device 310 is present in operation 701.

In operation 702, in response to identifying that the first AP 331 connected to the electronic device 310 is present (operation 701-Y), the electronic device 310 may identify whether a simultaneous support frequency band of the electronic device 310, which is higher than the frequency band of the channel between the first AP 331 and the electronic device 310, is present.

According to an embodiment, in the case in which the electronic device 310 supports simultaneous transmission and/or reception of signals of a first frequency band and a second frequency band, and the frequency band of the channel between the first AP 331 and the electronic device 310 is the first frequency band, the simultaneous support frequency band of the electronic device 310, which is higher than the frequency band of the channel between the first AP 331 and the electronic device 310, may be the second frequency band.

According to an embodiment, in the case in which the electronic device 310 supports simultaneous transmission and/or reception of signals of the first frequency band and the second frequency band, and the frequency band of the channel between the first AP 331 and the electronic device 310 is the second frequency band, a simultaneous support frequency band of the electronic device 310, which is higher than the frequency band of the channel between the first AP 331 and the electronic device 310, may not be present.

In operation 703, upon identifying that a simultaneous support frequency band of the electronic device 310, which is higher than the frequency band of the channel between the first AP 331 and the electronic device 310, is present (operation 702-Y), the electronic device 310 may identify whether a preferred frequency band of the external electronic device 320, which is higher than the frequency band of a preferred channel of the external electronic deice 320, is present.

According to an embodiment, in order to transmit information associated with an AP (e.g., the second AP 333 of FIG. 3A) connected to the external electronic device 320 to the electronic device 310, the external electronic device 320 may set a preferred channel of the external electronic device 320 by using the channel number of the channel between the external electronic device 320 and the second AP 333. The fact that a preferred frequency band of the external electronic device 320, which is higher than the frequency band of the preferred channel of the external electronic device 320, is present may imply that the external electronic device 320 supports simultaneous transmission and/or reception of signals via a frequency band corresponding to the preferred channel and the preferred frequency band.

In operation 704, upon identifying that a preferred frequency band of the external electronic device 320, which is higher than the frequency band of the preferred channel of the external electronic device 320, is present (operation 703-Y), the electronic device 310 may identify whether the simultaneous support frequency band of the electronic device 310 and the preferred frequency band of the external electronic device 320 are identical.

In operation 705, upon identifying that the simultaneous support frequency band of the electronic device 310 and the preferred frequency band of the external electronic device 320 are identical (operation 704-Y), the electronic device 310 may select one of the channels of the simultaneous support frequency band of the electronic device 310.

The simultaneous support frequency band of the electronic device 310 may be the simultaneous support frequency band identified in operation 702. When selecting the simultaneous support frequency band of the electronic device 310, the electronic device 310 may be capable of supporting simultaneous transmission and/or reception of signals of the frequency band of the channel established between the first AP 331 and the electronic device 310 and the frequency band of the channel established between the external electronic device 320 and the electronic device 310, thereby preventing 3-way channel concurrency and improving QoS.

In operation 706, upon identifying that the simultaneous support frequency band of the electronic device 310 and the preferred frequency band of the external electronic device 320 are not identical (operation 704-N), the electronic device 310 may select a channel of an overlapping band between the simultaneous support frequency band of the electronic device 310 and the preferred frequency band of the external electronic device 320.

When selecting a channel of an overlapping band in the simultaneous support frequency band of the electronic device 310, the electronic device 310 may be capable of supporting simultaneous transmission and/or reception of signals of the frequency band of the channel established between the first AP 331 and the electronic device 310 and the frequency band of the channel established between the external electronic device 320 and the electronic device 310, thereby preventing 3-way channel concurrency and improving QoS.

In operation 707, upon identifying that the first AP 331 connected to the electronic device 310 is not present (operation 701-N), the electronic device 310 may identify whether a preferred frequency band of the external electronic device 320, which is higher than the frequency band of the preferred channel of the external electronic device 320, is present.

According to an embodiment, in order to transmit information associated with the AP (e.g., the second AP 333 of FIG. 3A) connected to the external electronic device 320 to the electronic device 310, the external electronic device 320 may set a preferred channel of the external electronic device 320 by using the channel number of the channel between the external electronic device 320 and the second AP 333. The fact that a preferred frequency band of the external electronic device 320, which is higher than the frequency band of the preferred channel of the external electronic device 320, is present may imply that the external electronic device 320 supports simultaneous transmission and/or reception of signals via a frequency band corresponding to the preferred channel and the preferred frequency band.

In operation 708, upon identifying that a preferred frequency band of the external electronic device 320, which is higher than the frequency band of the preferred channel of the external electronic device 320, is present (operation 707-Y), the electronic device 310 may select a channel of the simultaneous support frequency band of the external electronic device 320 (or a channel of the preferred frequency band of the external electronic device 320).

By taking into consideration that 3-way channel concurrency is incapable of occurring when the electronic device 310 is not connected to the first AP 331, the electronic device 310 may select a channel of a higher frequency band between the frequency band of the preferred channel of the external electronic device 320 and the preferred frequency band of the external electronic device 320, thereby providing a relatively high transmission speed and/or reception speed.

In operation 711, upon identifying that a preferred frequency band of the external electronic device 320, which is higher than the frequency band of the preferred channel of the external electronic device 320, is not present (operation 707-N), the electronic device 310 may select the preferred channel of the external electronic device 320.

By taking into consideration that 3-way channel concurrency is incapable of occurring when the electronic device 310 is not connected to the first AP 331, the electronic device 310 may select the preferred channel of the external electronic device 320 that is a channel of a higher frequency band between the frequency band of the preferred channel of the external electronic device 320 and the preferred frequency band of the external electronic device 320, thereby providing a relatively high transmission speed and/or reception speed.

In operation 709, upon identifying that a simultaneous support frequency band of the electronic device 310, which is higher than the frequency band of the channel between the first AP 331 and the electronic device 310, is not present (operation 702-N), the electronic device 310 may identify whether the frequency band of the preferred channel of the external electronic device 320 is higher than the frequency band of the first AP 331 connected to the electronic device 310.

In the case in which the frequency band of the channel between the first AP 331 and the electronic device 310 and the preferred channel of the external electronic device 320 (or a channel between the second AP 333 and the external electronic device 320) are different from each other, the electronic device 310 may take into consideration that 3-way channel concurrency is incapable of occurring, and may select a channel of a relatively higher frequency band between the frequency band of the preferred channel of the external electronic device 320 and the frequency band of the first AP 331 connected to the electronic device 310.

In operation 710, upon identifying that the frequency band of the preferred channel of the external electronic device 320 is lower than the frequency band of the first AP 331 connected to the electronic device 310 (operation 709-N), the electronic device 310 may select a channel that is the same as the channel of the first AP 331 connected to the electronic device 310.

In operation 711, upon identifying that the frequency band of the preferred channel of the external electronic device 320 is higher than the frequency band of the first AP 331 connected to the electronic device 310 (operation 709-Y), the electronic device may select the preferred channel of the external electronic device 320.

FIG. 8A and FIG. 8B are flowcharts illustrating an operation of selecting a channel to be connected to an external electronic device, by an electronic device according to various embodiments of the disclosure.

Hereinafter, a description is provided on the assumption that an electronic device (e.g., the electronic device 310 of FIG. 4) performs group owner (GO) negotiation with an external electronic device (e.g., the external electronic device 320 of FIG. 3A), the electronic device 310 performs a GO function, and the external electronic device 320 performs a group client (GC) function.

Based on the attribute of the application and the performance information of the external electronic device 320, the electronic device 310 may select a channel to be established between the electronic device 310 and the external electronic device 320.

The electronic device 310 may identify the attribute of the application being executed. The attribute of the application may differ depending on whether the application provides a service that requires high quality of service (QoS) and/or whether the application provides a service that requires a high transmission speed and/or reception speed.

For example, an application (e.g., miracast, music share, or camera control) that provides a service (e.g., image content sharing or sound content sharing) which requires high QoS may have a first attribute that indicates provision of a service that requires high QoS. An application (e.g., smart switch, quick share, nearby share, or music transfer) that provides a service (e.g., file sharing) which requires a high transmission speed and/or reception speed may have a second attribute indicating provision of a service that requires a high transmission speed and/or reception speed.

Based on the attribute of the application and the performance information of the external electronic device 320, the electronic device 310 may select a channel to be used for connection between the electronic device 310 and the external electronic device 320.

According to an embodiment, upon identifying that the attribute of the application is the second attribute, the electronic device 310 may select a channel of a higher frequency band between a frequency band in which the electronic device 310 is capable of performing simultaneous transmission and/or reception and a frequency band in which the external electronic device 320 is capable of performing simultaneous transmission and/or reception.

The embodiment related to channel selection described with reference to FIG. 8A and FIG. 8B may be applicable when the attribute of an application being executed is the second attribute.

The electronic device 310 may identify whether an AP (e.g., the first AP 331 of FIG. 3A) connected to the electronic device 310 is present in operation 801.

In operation 802, upon identifying that the first AP 331 connected to the electronic device 310 is present (operation 801-Y), the electronic device 310 may identify whether an AP (e.g., the second AP 332 of FIG. 3A) connected to the external electronic device 320 is present.

Based on a GO intent value included in a GO negotiation response message received during a GO negotiation process, the electronic device 310 may identify whether the second AP 332 connected to the external electronic device 320 is present.

With reference to a channel number field of an operating channel attribute field included in a GO negotiation response message received during the GO negotiation process, the electronic device 310 may identify whether the second AP 332 connected to the external electronic device 320 is present. The external electronic device 320 may produce and transmit the GO negotiation response message in a manner of adding, to the channel number field, channel information of a channel between the external electronic device 320 and the second AP 331.

The electronic device 310 may parse a VSIE included in a message transmitted by the external electronic device 320 before the GO negotiation, and, based on information that is related to the AP 332 connected to the external electronic device 320 and is included in the VSIE, may identify whether an AP connected to the external electronic device 320 is present.

In operation 803, upon identifying that the second AP 332 connected to the external electronic device 320 is present (operation 802-Y), the electronic device 310 may identify whether a channel between the electronic device 310 and the first AP 331 and a channel between the external electronic device 320 and the second AP 333 are identical.

In operation 804, upon identifying that the channel between the electronic device 310 and the first AP 331 and the channel between the external electronic device 320 and the second AP 333 are identical (operation 803-Y), the electronic device 310 may select a channel of the highest frequency band among frequency bands supported by the electronic device 310 and the external electronic device 320. According to an embodiment, in the case in which the electronic device 301 and the external electronic device 320 are connected to the same AP (e.g., the first AP 331), the electronic device 310 may select a channel of the highest frequency band among the frequency bands supported by the electronic device 310 and the external electronic device 320.

A frequency band supported by the electronic device 310 may be a frequency band in which transmission and/or reception is available simultaneously with transmission and/or reception of a signal of the frequency band of the channel between the electronic device 310 and the first AP 331. A frequency band supported by the external electronic device 320 may be a frequency band in which transmission and/or reception is available simultaneously with transmission and/or reception of a signal of the frequency band of the channel between the external electronic device 320 and the second AP 333. The electronic device 310 may select a channel of the highest frequency band among the frequency bands supported by the electronic device 310 and the external electronic device 320, thereby preventing 3-way channel concurrency and providing a high transmission speed and/or reception speed.

In operation 804, upon identifying that the second AP 332 connected to the external electronic device 320 is not present (operation 802-N), the electronic device 310 may select a channel of the highest frequency band among the frequency bands supported by the electronic device 310 and the external electronic device 320.

A frequency band supported by the electronic device 310 may be a frequency band in which transmission and/or reception is available simultaneously with transmission and/or reception of a signal of the frequency band of the channel between the electronic device 310 and the first AP 331. Since the external electronic device 320 is not connected to the second AP 333, it may be a situation in which 3-way channel concurrency is incapable of occurring. Therefore, the electronic device 310 may select a channel of the highest frequency band among the frequency bands supported by the electronic device 310 and the external electronic device 320, thereby providing a high transmission speed and/or reception speed.

In operation 805, upon identifying that the channel between the electronic device 310 and the first AP 331 and the channel between the external electronic device 320 and the second AP 333 are not identical (operation 803-N), the electronic device 310 may identify whether the frequency band of the channel between the electronic device 310 and the first AP 331 and the frequency band of the channel between the external electronic device 320 and the second AP 333 are identical.

The situation in which the channel between the electronic device 310 and the first AP 331 and the channel between the external electronic device 320 and the second AP 333 are not identical may be a situation in which 3-way channel concurrency is capable of occurring.

In operation 806, upon identifying that the frequency band of the channel between the electronic device 310 and the first AP 331 and the frequency band of the channel between the external electronic device 320 and the second AP 333 are identical (operation 805-Y), the electronic device 310 may identify whether a frequency band in which 3-way channel concurrency is avoidable is present between a frequency band in which the electronic device 310 is capable of performing simultaneous transmission and/or reception and a frequency band in which the external electronic device 320 is capable of performing simultaneous transmission and/or reception.

For example, in the case in which the frequency band of the channel between the electronic device 310 and the first AP 331 and the frequency band of the channel between the external electronic device 320 and the second AP 333 correspond to a first frequency band, and the electronic device 310 is capable of performing simultaneous transmission and/or reception of signals of the first frequency band and a second frequency band, the second frequency band may be a frequency band in which 3-way channel concurrency is avoidable.

For example, in the case in which the frequency band of the channel between the electronic device 310 and the first AP 331 and the frequency band of the channel between the external electronic device 320 and the second AP 333 correspond to the first frequency band, the electronic device 310 is incapable of performing simultaneous transmission and/or reception of signals of the first frequency band and a third frequency band, and a frequency band in which the external electronic device 320 is capable of performing transmission and/or reception simultaneously with a signal of the third frequency band is not present, there may be no frequency band in which 3-way channel concurrency is avoidable.

In operation 807, upon identifying that a frequency band in which 3-way channel concurrency is avoidable is present between a frequency band in which the electronic device 310 is capable of performing simultaneous transmission and/or reception and a frequency band in which the external electronic device 320 is capable of performing simultaneous transmission and/or reception (operation 806-Y), the electronic device 310 may select a channel of the frequency band in which 3-way channel concurrency is avoidable.

In operation 808, upon identifying that a frequency band in which 3-way channel concurrency is avoidable is not present between a frequency band in which the electronic device 310 is capable of performing simultaneous transmission and/or reception and a frequency band in which the external electronic device 320 is capable of performing simultaneous transmission and/or reception (operation 806-N), the electronic device 310 may select a channel between the electronic device 310 and the first AP 331.

In operation 809, upon identifying that the first AP 331 connected to the electronic device 310 is not present (operation 801-N), the electronic device 310 may identify whether a frequency band of the external electronic device 320, which is higher than the frequency band of a preferred channel of the external electronic device 320, is present.

According to an embodiment, in order to transmit information associated with an AP (e.g., the second AP 333 of FIG. 3A) connected to the external electronic device 320 to the electronic device 310, the external electronic device 320 may set a preferred channel of the external electronic device 320 by using the channel number of the channel between the external electronic device 320 and the second AP 333. The fact that a preferred frequency band of the external electronic device 320, which is higher than the frequency band of the preferred channel of the external electronic device 320, is present may imply that the external electronic device 320 supports simultaneous transmission and/or reception of signals via the frequency band corresponding to the preferred channel and the preferred frequency band.

In operation 804, upon identifying that a frequency band of the external electronic device 320, which is higher than the frequency band of the preferred channel of the external electronic device 320, is present (operation 809-Y), the electronic device 310 may select a channel of the highest frequency band among frequency bands supported by the electronic device 310 and the external electronic device 320.

A frequency band supported by the electronic device 310 may be a frequency band in which transmission and/or reception is available simultaneously with transmission and/or reception of a signal of the frequency band of the channel between the electronic device 310 and the first AP 331. A frequency band supported by the external electronic device 320 may be a frequency band in which transmission and/or reception is available simultaneously with transmission and/or reception of a signal of the frequency band of the channel between the external electronic device 320 and the second AP 333. The electronic device 310 may select a channel of the highest frequency band among the frequency bands supported by the electronic device 310 and the external electronic device 320, thereby preventing 3-way channel concurrency and providing a high transmission speed and/or reception speed.

In operation 810, upon identifying that a frequency band of the external electronic device 320, which is higher than the frequency band of the preferred channel of the external electronic device 320, is not present (operation 809-N), the electronic device 310 may select the preferred channel of the external electronic device 320.

In operation 811, upon identifying that the frequency band of the channel between the electronic device 310 and the first AP 331 and the frequency band of the channel between the external electronic device 320 and the second AP 333 are not identical (operation 805-N), the electronic device 310 may identify whether at least one of the electronic device 310 and the external electronic device 320 supports a frequency band higher than the frequency band of the channel of an AP connected to each electronic device.

For example, in the case in which the frequency band of the channel between the electronic device 310 and the first AP 331 is the first frequency band, the frequency band of the channel between the external electronic device 320 and the second AP 333 is the second frequency band, and the electronic device 310 is capable of performing simultaneous transmission and/or reception of signals of the first frequency band and the second frequency band, the electronic device 310 may support a frequency band (e.g., the second frequency band) higher than the frequency band (e.g., the first frequency band) of the AP channel.

As another example, in the case in which the frequency band of the channel between the external electronic device 320 and the second AP 333 is the second frequency band, the frequency band of the channel between the external electronic device 320 and the second AP 333 is the first frequency band, and the external electronic device 320 is capable of performing simultaneous transmission and/or reception of signals of the first frequency band and the second frequency band, the external electronic device 320 may not support a frequency band higher than the frequency band (e.g., the second frequency band) of the AP channel.

Based on data (e.g., a GO intent, an operating channel attribute field) included in a GO negotiation response message received from the external electronic device 320 during a GO negotiation process, the electronic device 310 may identify whether at least one of the electronic device 310 and the external electronic device 320 simultaneously supports a frequency band higher than the frequency band of the channel of an AP connected to each electronic device.

In operation 812, upon identifying that at least one of the electronic device 310 and the external electronic device 320 simultaneously supports a frequency band higher than the frequency band of the channel of the AP connected to each electronic device (operation 811-support), the electronic device 310 may select a channel of the highest frequency band among the frequency bands that the electronic device 310 and the external electronic device 320 simultaneously support.

By selecting the channel of the frequency band that the electronic device 310 and the external electronic device 320 simultaneously support, the electronic device 310 may prevent 3-way channel concurrency and may perform data transmission and/or reception using a channel of the higher frequency band, thereby providing a relatively high transmission speed and/or reception speed.

In operation 813, upon identifying that at least one of the electronic device 310 and the external electronic device 320 does not support a frequency band higher than the frequency band of the channel of the AP connected to each electronic device (operation 811-not support), the electronic device 310 may select a channel of a higher frequency band between the channel between the electronic device 310 and the first AP 331 and the channel between the external electronic device 320 and the second AP 333.

By selecting a channel of a higher frequency band between the channel between the electronic device 310 and the first AP 331 and the channel between the external electronic device 320 and the second AP 333, the electronic device 310 may prevent 3-way channel concurrency and may perform data transmission and/or reception using the channel of the higher frequency band, thereby providing a relatively high transmission speed and/or reception speed.

An electronic device (e.g., the electronic device 310 of FIG. 4) according to various embodiments of the disclosure may include a communication circuit (e.g., the communication circuit 410 of FIG. 4) configured to support simultaneous transmission and reception of signals of different frequency bands of short-distance wireless communication, and a processor (e.g., the processor 420 of FIG. 4) operatively connected to the communication circuit 410, and the processor 420 may be configured to perform discovery of an external electronic device (e.g., the external electronic device 320 of FIG. 3A) to be connected to the electronic device 310 via the short-distance wireless communication in response to execution of an application, may be configured to receive performance information of the external electronic device 320 that is related to whether simultaneous transmission and reception of signals of different frequency bands is supported, during a group owner (GO) negotiation procedure performed between the external electronic device 320 and the electronic device 310, and, based on an attribute of the application and the performance information of the external electronic device 320, may be configured to select a frequency band and/or channel to be used for connection to the external electronic device 320.

In the electronic device 310 according to various embodiments of the disclosure, the performance information of the external electronic device 320 may include information indicating at least one preferred channel and/or at least one preferred frequency band to be used when the external electronic device 320 transmits data via the short-distance wireless communication.

In the electronic device 310 according to various embodiments of the disclosure, the preferred channel may include a channel connected between the external electronic device 320 and an access point (AP) (e.g., the second AP 333 of FIG. 3A) connected to the external electronic device 320, and the preferred frequency band may include a simultaneous support frequency band that is a frequency band in which signal transmission/reception is capable of being performed simultaneously while signal transmission/reception is performed via a frequency band corresponding to a channel connected between the external electronic device 320 and the AP 333, and the simultaneous support frequency band may be a frequency band different from a frequency band corresponding to the channel connected between the external electronic device 320 and the AP 333.

In the electronic device 310 according to various embodiments of the disclosure, when the electronic device 310 is connected to a first AP (e.g., the first AP 331 of FIG. 3A) via the short-distance wireless communication, the processor 420 may be configured to select a channel to be used for connection to the external electronic device 320 with reference to the frequency band of a channel between the electronic device 310 and the first AP 331, the attribute of the application, the preferred channel, and the preferred frequency band.

In the electronic device 310 according to various embodiments of the disclosure, the performance information of the external electronic device 320 may be included in a GO intent included in a message received during the GO negotiation procedure.

In the electronic device 310 according to various embodiments of the disclosure, the GO intent may be configured to be different based on the frequency band of a channel between the external electronic device 320 and the access point (AP) 333 connected to the external electronic device 320 and whether the external electronic device 320 is capable of supporting signal transmission/reception via a first frequency band and signal transmission/reception via a second frequency band, simultaneously.

In the electronic device 310 according to various embodiments of the disclosure, the performance information of the external electronic device 320 may be included in an operating channel attribute received during the GO negotiation and/or a vender specific information element (VSIE).

In the electronic device 310 according to various embodiments of the disclosure, the performance information of the external electronic device 320 may be included in a VSIE received during the process of discovering the external electronic device 320.

In the electronic device 310 according to various embodiments of the disclosure, the attribute of the application may include a first attribute indicating that the application provides a service that requires high quality of service (QoS) and/or a second attribute indicating that the application provides a service that requires a high transmission speed and/or a high reception speed.

In the electronic device 310 according to various embodiments of the disclosure, the processor 420 may be configured to select a channel based on channel information of the first AP 331 connected to the electronic device 310 and channel information of the AP 333 connected to the external electronic device 320, in response to identifying that the attribute of the application is the first attribute.

In the electronic device 310 according to various embodiments of the disclosure, the processor 420 may be configured to select a channel based on a simultaneous support frequency band of the electronic device 310 and a simultaneous support frequency band of the external electronic device 320 in response to identifying that the attribute of the application corresponds to the second attribute.

An electronic device (e.g., the electronic device 310 of FIG. 3) according to various embodiments of the disclosure may include a communication circuit (e.g., the communication circuit 410 of FIG. 4) configured to support simultaneous transmission and reception of signals of different frequency bands of short-distance wireless communication, and a processor (e.g., the processor 420 of FIG. 4) operatively connected to the communication circuit 410, and the processor 420 may be configured to perform discovery of an external electronic device (e.g., the external electronic device 320 of FIG. 4) to be connected to the electronic device 310 via the short-distance wireless communication in response to execution of an application, may be configured to receive performance information of the external electronic device 320 that is related to whether simultaneous transmission and reception of signals of different frequency bands is supported, during a group owner (GO) negotiation performed between the external electronic device 320 and the electronic device 310, and may be configured to select a frequency band and/or channel to be used for connection to the external electronic device 320 with reference to performance information of the electronic device 310 and the performance information of the external electronic device320, and the performance information of the external electronic device 320 may be included in a GO intent included in a message received during the GO negotiation procedure.

In the electronic device 310 according to various embodiments of the disclosure, the GO intent may be configured to be different based on the frequency band of a channel between the external electronic device 320 and an access point (AP) (e.g., the second AP 333 of FIG. 3A) and whether the external electronic device 320 is capable of supporting signal transmission/reception via a first frequency band and signal transmission/reception via a second frequency band, simultaneously.

In the electronic device 310 according to various embodiments of the disclosure, the performance information of the external electronic device 320 may include information indicating at least one preferred channel and/or at least one preferred frequency band to be used when the external electronic device 320 transmits data via the short-distance wireless communication.

In the electronic device 310 according to various embodiments of the disclosure, the preferred channel may include a channel connected between the external electronic device 320 and an access point (AP), the preferred frequency band may include a simultaneous support frequency band that is a frequency band in which signal transmission/reception is capable of being performed simultaneously while signal transmission/reception is performed via a frequency band corresponding to the channel connected between the external electronic device 320 and the AP 331, and the simultaneous support frequency band may be a frequency band different from the frequency band corresponding to the channel connected between the external electronic device and the AP.

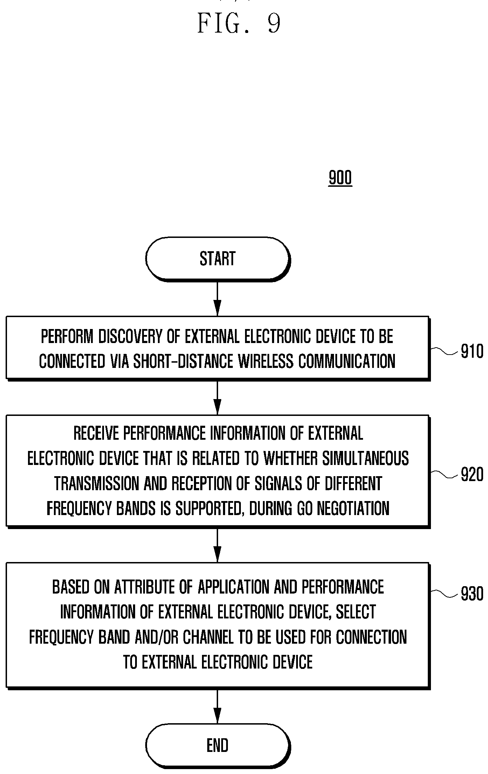

FIG. 9 is a flowchart illustrating an operation method 900 of an electronic device according to various embodiments.

According to various embodiments of the disclosure, in operation 910, an electronic device (e.g., the electronic device 310 of FIG. 4) may discover an external electronic device (e.g., the external electronic device 320 of FIG. 3A) to be connected via short-distance wireless communication.

The electronic device 310 may execute an application installed in a memory (e.g., the memory 130 of FIG. 1) of the electronic device 310. The executed application may be an application that performs a predetermined service (e.g., content sharing and/or data transmission) via short-distance wireless communication. As the application is executed, the electronic device 310 may perform discovery (e.g., P2P discovery) of the external electronic device 320 to be connected to the electronic device 310 via short-distance wireless communication.

As a part of the discovery procedure, the electronic device 310 may control the communication circuit 410 so as to broadcast a probe request message. The probe request message may include the device name of the electronic device 310, and the identification information of the application executed in the electronic device 310. The external electronic device 320 that receives the probe request message may transmit a probe response message to the electronic device 310. The probe response message may include the device name of the external electronic device 320, and the identification information of an application executed in the external electronic device 320.

The electronic device 310 may select the external electronic device 320 to connect to.

The electronic device 310 may receive the probe response message and may select, based on information included in the probe response message, the external electronic device 320 to be connected.

According to various embodiments, in operation 920, the electronic device 310 may receive performance information of the external electronic device 320 related to whether simultaneous transmission and/or reception of signals of different frequency bands is supported, during group owner (GO) negotiation.

The electronic device 310 may transmit a group owner (GO) negotiation request message including a selected preferred channel and/or preferred frequency band.

The electronic device 310 may perform GO negotiation with the selected external electronic device 320 when selecting the preferred channel and/or preferred frequency band is completed.

As a part of the GO negotiation, the electronic device 310 may control the communication circuit 410 so as to transmit a GO negotiation request message to the external electronic device 320.

The GO negotiation request message may include P2P IE information and WSC IE information. The P2P IE information may include a GO intent and operating channel attribute information to be used for determining a GO. The operating channel attribute may include preferred channel information that is information related to a channel that the electronic device 310 prefers among the channels capable of being established between the electronic device 310 and the external electronic device 320, and/or preferred frequency band information that is information related to a frequency band that the electronic device 310 prefers. The preferred channel information may be included in a channel number field of an operating channel attribute field. The preferred frequency band information may be included in an operating class field of the operating channel attribute field.

Based on the frequency band of a channel established between the electronic device 310 and an AP (e.g., the first AP 331) connected to the electronic device 310, and simultaneous transmission and/or reception capability of the communication circuit 410, the electronic device 310 may set a GO intent value. The electronic device 310 may set a GO intent value to be different based on the frequency band of the channel of the AP (e.g., the first AP 331) connected to the electronic device 310, and simultaneous transmission and/or reception capability of the communication circuit 410. An embodiment associated with setting of the GO intent value is described with reference to FIG. 5. Based on the GO intent value included in the GO negotiation request message, the external electronic device 420 may identify state information of the electronic device 310 (e.g., frequency band information of a channel established between the electronic device 310 and the first AP 331 and/or simultaneous transmission and/or reception capability of the communication circuit 410 of the electronic device 310).

To transmit, to the external electronic device 320, the channel information of the first AP 331 connected to the electronic device 310, the electronic device 310 may include the channel information of the first AP 331 in the channel number field of the operating channel attribute field.

The electronic device 310 may receive performance information of the external electronic device 320 related to simultaneous transmission and/or reception of signals of different frequency bands.

The electronic device 310 may receive a GO negotiation response message in response to the GO negotiation request message.

The GO negotiation response message may include P2P IE information and WSC IE information. The P2P IE information may include a GO intent and operating channel attribute information to be used for determining a GO. The operating channel attribute may include preferred channel information that is information related to a channel that the external electronic device 320 prefers among the channels capable of being established between the electronic device 310 and the external electronic device 320, and/or preferred frequency band information that is information related to a frequency band that the external electronic device 320 prefers. The preferred channel information may be included in a channel number field of an operating channel attribute field. The preferred frequency band information may be included in an operating class field of the operating channel attribute field.

The GO intent value included in the GO negotiation response message may differ depending on a channel frequency band of an AP (e.g., the second AP 333) connected to the external electronic device 320 and simultaneous transmission and/or reception capability of the external electronic device 320. Based on the GO intent value included in the GO negotiation response message, the electronic device 310 may identify state information of the external electronic device 320 (e.g., frequency band information of a channel established between the external electronic device 320 and the second AP 333 and/or simultaneous transmission and/or reception capability of the external electronic device 320).

The channel number field included in the GO negotiation response message may include a channel number of the AP (e.g., the second AP 333) connected to the external electronic device 320.

The electronic device 310 may compare the GO intent value included in the GO negotiation response message and the GO intent value (or the GO intent value included in the GO negotiation request message) produced by the electronic device 400, and may perform, based on a comparison result, a GO function. An electronic device that transmits a higher GO intent value may be determined to be a group owner (GO), and an electronic device that transmits a lower GO intent value may be determined to be a group client (GC). The GO may operate as a host in a short-distance wireless communication system, and the GC may operate as a client.

According to an embodiment, the electronic device 310 may identify the performance information of the external electronic device 320 with reference to the operating channel attribute field.

According to another embodiment, the electronic device 310 may identify the performance information of the external electronic device 320 with reference to a vender specific information element (VSIE) included in a signal transmitted during GO negotiation or during a discovery procedure performed before the GO negotiation.

According to various embodiments of the disclosure, in operation 930, based on the attribute of the application and the performance information of the external electronic device 320, the electronic device 310 may select a frequency band and/or channel to be used for connection to the external electronic device 320.

The electronic device 310 may identify the attribute of the application being executed. The attribute of the application may differ depending on whether the application provides a service that requires high quality of service (QoS) and/or whether the application provides a service that requires a high transmission speed and/or reception speed.

For example, an application (e.g., miracast, music share, or camera control) that provides a service (e.g., image content sharing or sound content sharing) which requires high QoS may have a first attribute that indicates provision of a service that requires high QoS. An application (e.g., smart switch, quick share, nearby share, or music transfer) that provides a service (e.g., file sharing) which requires a high transmission speed and/or reception speed may have a second attribute indicating provision of a service that requires a high transmission speed and/or reception speed.

Based on the attribute of the application and the performance information of the external electronic device 320, the electronic device 310 may select a channel to be used for connection between the electronic device 310 and the external electronic device 320.

According to an embodiment, upon identifying that the attribute of the application is the first attribute, the electronic device 310 may select a channel between the electronic device 310 and the external electronic device 320 with reference to channel information of the first AP 331 connected to the electronic device 310 and/or channel information of the second AP 333 connected to the external electronic device 320. The electronic device 310 may select between the channel established between the electronic device 310 and the first AP 331 and the channel established between the external electronic device 320 and the second AP 333. In the case in which the channel established between the electronic device 310 and the first AP 331 and the channel established between the electronic device 310 and the external electronic device 320 are identical, the electronic device 310 may be capable of preventing a phenomenon in which data transmission and/or reception is temporarily unavailable and which occurs due to a change of a channel, thereby securing high QoS.

According to an embodiment, upon identifying that the attribute of the application is the second characteristic, the electronic device 310 may select a channel of a higher frequency band between a frequency band in which the electronic device 310 is capable of performing simultaneous transmission and/or reception and a frequency band in which the external electronic device 320 is capable of performing simultaneous transmission and/or reception. The electronic device 310 may perform data transmission and/or reception with the external electronic device 320 via a channel of a high frequency band in which a relatively high transmission and/or reception speed is provided, thereby improving the quality of a service provided by the application.

An operation method of an electronic device (e.g., the electronic device 310 of FIG. 3) according to various embodiments of the disclosure may include an operation of performing discovery of an external electronic device (e.g., the external electronic device 320 of FIG. 3) to be connected to the electronic device 310 via short-distance wireless communication in response to execution of an application, operation of receiving performance information of the external electronic device 320 that is related to whether simultaneous transmission and reception of signals of different frequency bands is supported, during a group owner (GO) negotiation procedure performed between the external electronic device 320 and the electronic device 310, and an operation of selecting a frequency band and/or channel to be used for connection to the external electronic device 320 with reference to an attribute of the application and performance information of the external electronic device 320.

In the operation method of the electronic device 310 according to various embodiments of the disclosure, the performance information of the external electronic device 320 may include information indicating at least one preferred channel and/or at least one preferred frequency band to be used when the external electronic device 320 transmits data via the short-distance wireless communication.

In the operation method of the electronic device 310 according to various embodiments of the disclosure, the preferred channel may include a channel connected between the external electronic device 320 and an access point (AP) (e.g., the second AP 333 of FIG. 3) connected to the external electronic device 320, the preferred frequency band may include a simultaneous support frequency band that is a frequency band in which signal transmission/reception is capable of being performed simultaneously while signal transmission/reception is performed via a frequency band corresponding to a channel connected between the external electronic device 320 and the AP 333, and the simultaneous support frequency band may be a frequency band different from a frequency band corresponding to the channel connected between the external electronic device 320 and the AP 333.

In the operation method of the electronic device 310 according to various embodiments of the disclosure, the operation of selecting the channel to be used for connection to the external electronic device 320 may include, in a case in which the electronic device 310 is connected to a first AP (e.g., the first AP 331 of FIG. 3A) via the short-distance wireless communication, an operation of selecting a channel to be used for connection to the external electronic device 320 with reference to the frequency band of a channel between the electronic device 310 and the first AP 331, the attribute of the application, the preferred channel, and the preferred frequency band.

In the operation method of the electronic device 310 according to various embodiments of the disclosure, the performance information of the external electronic device 320 may be included in a GO intent included in a message received during the GO negotiation procedure.

In the operation method of the electronic device 310 according to various embodiments of the disclosure, the GO intent may be configured to be different based on the frequency band of the channel between the external electronic device 320 and the access point (AP) 331 connected to the external electronic device 320 and whether the external electronic device 320 is capable of supporting signal transmission/reception via the first frequency band and signal transmission/reception via the second frequency band, simultaneously.

In the operation method of the electronic device 310 according to various embodiments of the disclosure, the performance information of the external electronic device 320 may be included in an operating channel attribute received during the GO negotiation and/or a vender specific information element (VSIE).

In the operation method of the electronic device 310 according to various embodiments of the disclosure, the attribute of the application may include a first attribute indicating that the application provides a service that requires high quality of service (QoS) and/or a second attribute indicating that the application provides a service that requires a high transmission speed and/or a high reception speed.

In the operation method of the electronic device 310 according to various embodiments of the disclosure, the selecting of the channel to be used for connection to the external electronic device 320 may include an operation of selecting a channel based on channel information of the AP 331 connected to the electronic device 310 and channel information of the AP 333 connected to the external electronic device 320 in response to identifying that the attribute of the application is the first attribute, or an operation of selecting a channel based on a simultaneous support frequency band of the electronic device 310 and a simultaneous support frequency band of the external electronic device 320 in response to identifying that the attribute of the application corresponds to the second attribute.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit configured to support simultaneous transmission and reception of signals of different frequency bands of short-distance wireless communication; and
a processor operatively connected to the communication circuit,
wherein the processor is configured to:
perform discovery of an external electronic device to be connected to the electronic device via the short-distance wireless communication in response to execution of an application;
receive performance information of the external electronic device that is related to whether simultaneous transmission and reception of signals of different frequency bands is supported, during a group owner (GO) negotiation procedure performed between the external electronic device and the electronic device; and
based on an attribute of the application and the performance information of the external electronic device, select a frequency band and/or channel to be used for connection to the external electronic device.

2. The electronic device of claim 1, wherein the performance information of the external electronic device comprises information indicating at least one preferred channel and/or at least one preferred frequency band to be used in case that the external electronic device transmits data via the short-distance wireless communication.

3. The electronic device of claim 2, wherein the preferred channel comprises a channel connected between the external electronic device and an access point (AP) connected to the external electronic device,
wherein the preferred frequency band comprises a simultaneous support frequency band that is a frequency band in which signal transmission/reception is capable of being performed simultaneously while signal transmission/reception is performed via a frequency band corresponding to the channel connected between the external electronic device and the AP, and
wherein the simultaneous support frequency band is a frequency band different from a frequency band corresponding to the channel connected between the external electronic device and the AP.

4. The electronic device of claim 3, wherein, in case that the electronic device is connected to a first AP via the short-distance wireless communication, the processor is configured to select a channel to be used for connection to the external electronic device with reference to a frequency band of a channel between the electronic device and the first AP, the attribute of the application, the preferred channel, and the preferred frequency band.

5. The electronic device of claim 1, wherein the performance information of the external electronic device is included in a GO intent included in a message received during the GO negotiation procedure.

6. The electronic device of claim 5, wherein the GO intent is configured to be different based on a frequency band of a channel between the external electronic device and the access point (AP) connected to the external electronic device and whether the external electronic device is capable of supporting signal transmission/reception via a first frequency band and signal transmission/reception via a second frequency band, simultaneously.

7. The electronic device of claim 1, wherein the performance information of the external electronic device is included in an operating channel attribute received during the GO negotiation and/or a vender specific information element (VSIE).

8. The electronic device of claim 1, wherein the performance information of the external electronic device is included in a VSIE received during the external electronic device discovery process.

9. The electronic device of claim 1, wherein the attribute of the application comprises a first attribute indicating that the application provides a service that requires high quality of service (QoS) and/or a second attribute indicating that the application provides a service that requires a high transmission speed and/or a high reception speed.

10. The electronic device of claim 9, wherein the processor is configured to select a channel based on channel information of a first AP connected to the electronic device and channel information of the AP connected to the external electronic device in response to identifying that the attribute of the application is the first attribute.

11. The electronic device of claim 9, wherein the processor is configured to select a channel based on a simultaneous support frequency band of the electronic device and a simultaneous support frequency band of the external electronic device in response to identifying that the attribute of the application corresponds to the second attribute.

12. An operation method of an electronic device, the method comprising:
performing discovery of an external electronic device to be connected to the electronic device via short-distance wireless communication in response to execution of an application;
receiving performance information of the external electronic device that is related to whether simultaneous transmission and reception of signals of different frequency bands is supported, during a group owner (GO) negotiation procedure performed between the external electronic device and the electronic device; and
based on an attribute of the application and performance information of the external electronic device, selecting a frequency band and/or channel to be used for connection to the external electronic device.

13. The method of claim 12, wherein the performance information of the external electronic device comprises information indicating at least one preferred channel and/or at least one preferred frequency band to be used in case that the external electronic device transmits data via the short-distance wireless communication.

14. The method of claim 13, wherein the preferred channel comprises a channel connected between the external electronic device and the access point (AP) connected to the external electronic device,
wherein the preferred frequency band comprises a simultaneous support frequency band that is a frequency band in which signal transmission/reception is capable of being performed simultaneously while signal transmission/reception is performed via a frequency band corresponding to the channel connected between the external electronic device and the AP, and
wherein the simultaneous support frequency band is a frequency band different from a frequency band corresponding to the channel connected between the external electronic device and the AP.

15. The method of claim 14, wherein the selecting of the channel to be used for connection to the external electronic device comprises:
in a case in which the electronic device is connected to a first AP via the short-distance wireless communication, selecting a channel to be used for connection to the external electronic device with reference to a frequency band of a channel between the electronic device and the first AP, the attribute of the application, the preferred channel, and the preferred frequency band.
